# EUROPEAN PATENT APPLICATION

(11) **EP 4 752 951 A1**
(43) Date of publication of application: **03.06.2026**
(21) Application number: 24215856.6
(22) Date of filing: 27.11.2024
(51) Int. Cl.: H01M 4/133, H01M 4/583, H01M 4/587, H01M 4/62, H01M 10/0525, H01M 10/0562, H01M 10/0565, H01M 4/02

(54) **NEW MATERIAL IN SOLID STATE BATTERIES**

(71) Applicant: CarbonX B.V., 1096 HA Amsterdam (NL)
(72) Inventor: The designation of the inventor has not yet been filed
(74) Representative: Nederlandsch Octrooibureau

(57) **Abstract**

The invention pertains to the use of porous, chemically interconnected, carbon nanofibres-comprising carbon networks as electrochemically active material in an anode of a solid-state battery, as electrochemically active material in a cathode of an anode-less solid-state battery, and/or as matrix material in a solid-state electrolyte of a solid-state battery or of an anode-less solid-state battery.

## Description

### Field of the Invention

The present invention is in the field of solid-state batteries. In particular, the present invention relates to a new material for improving the anode or solid electrolyte of a solid-state battery.

### Background

Conventional electrical batteries are formed by an anode, a cathode, and an ionic conductive electrolyte, which is typically a solution of cations. Solid-state batteries are electrical batteries which employ a solid-state electrolyte, instead of a solution. Solid-state batteries comprise an anode made of an electrochemically active component, a cathode made of an electrochemically active component, and a solid-state electrolyte comprising a solid matrix and an electrochemically active salt dispersed, i.e. solubilised, in the solid matrix. Most commonly, solid-state batteries are based on lithium and comprise an anode made of metallic lithium, a cathode made of oxides or sulphides and a solid-state electrolyte comprising lithium salts dispersed in a solid matrix. The matrix of the solid-state electrolyte may be made of ceramics, solid polymers or composite materials, which allow the migration of lithium ions. Solid-state electrolytes comprising (lithium) ions are described in the art as solvent-free salt solutions in a ceramic, polymeric, or composite material, wherein the (lithium) ions are solubilised and homogeneously dispersed in the solid state.

Among solid state batteries, anode-less batteries have attracted increasing attention. In the anode-less configuration, the battery is formed by a cathode, a solid electrolyte and a current collector. There is no lithium metal, graphite, or in any anode active material present during manufacturing. The cathode contains a (lithium) ion source. During the first charge cycle, deposition of (lithium) ions occurs on the charge collector. Ideally, during discharge, all deposited (lithium) ions are stripped and returned to the cathode as their original and only source.

Solid-state batteries are believed to have a number of advantages over conventional batteries. Among other benefits, solid-state batteries (i) are safer to use as they avoid dangerous or toxic materials such as organic electrolytes, and avoid flammable liquid electrolytes; (ii) have higher energy density than conventional batteries; and (iii) can be customised to specific shapes. Anode-less batteries have further advantages including higher energy density; lower production costs, due to savings on anode material and process steps; and higher safety, due to reduced metallic lithium in the cell. For these reasons, solid-state batteries are attracting attention in a number of fields, such as electric and/or hybrid vehicles, wearables, medical devices, space equipment, and drones.

However, solid-state batteries have several drawbacks which are still preventing wide-scale commercialization. Among other drawbacks, solid-state batteries (i) are still relatively costly, and (ii) have still relatively short life cycles. The relatively high cost of production is due to the complexity of manufacturing. The short life cycle may be due to several factors. A common issue is lithium dendrite formation. During migration of lithium between the anode and cathode, lithium dendrites may form. Such dendrites are not "soluble" in the solid-state electrolyte material and prevent further migration of lithium to the anode, until the battery can eventually not function anymore. Further issues may appear at the solid-solid interface between the solid-state electrolyte and anode or cathode. During battery performance, volume expansion (or contraction) of the solid-state electrolyte may lead to cracks and mechanical defects, because the anode/cathode cannot accommodate the difference in volume. Similarly, interfacial delamination may occur during the battery lifetime, also possibly leading to cracks and mechanical defects.

It is an object of the present invention to provide a material for the anode and/or the solid-state electrolyte of a solid-state battery that can prevent or reduce the above-mentioned drawbacks. Therefore, the present invention aims at providing a solid-state battery with improved life cycle.

### Summary of the invention

The inventors have found that porous, chemically interconnected, carbon nanofibres-comprising carbon networks form surprisingly strong composite layers with thermoplastic materials. When the carbon nanofibres-comprising carbon networks are 3D-printed in a thermoplastic matrix and composite layers are formed, the adhesion between layers is improved to the point that the object does not fail along the layers and can absorb exerted force (Example 1). Without wishing to be bound to a theory, this effect is believed to be due to the strong interaction between the carbon nanofibres-comprising carbon networks and thermoplastics. The carbon networks do not merely reinforce a thermoplastic composite, but strengthen the layer - layer interaction between carbon networks - thermoplastic composite layers. Such property is particularly beneficial in applications wherein the carbon nanofibres-comprising carbon networks are layered together with a thermoplastic, for example at the interface between a solid-state battery anode and solid-state electrolyte; or within a composite solid-state electrolyte. Moreover, since such carbon nanofibres-comprising carbon networks are porous carbon networks forming an intraparticle porous network, they are able to accommodate for volume changes. Using these insights, the inventors believe that when these networks are used as active material in the anode of solid-state batteries and/or in the solid matrix of solid-electrolytes, these are capable of overcoming the known drawbacks of solid-state batteries concerning volume expansion and interfacial delamination. The battery may also have a coating between the cathode and the solid-state electrolyte, and/or a coating between the anode and the solid-state electrolyte. In such setup, the networks may also be advantageously used in the optional coating applied between the cathode and the solid-state electrolyte and/or in the optional coating applied between the anode and the solid-state electrolyte.

Furthermore, the inventors have surprisingly found that in conventional lithium ion batteries the carbon nanofibres-comprising carbon networks lead to over 2300 cycles without any capacity loss (Example 2). In the art, solid-state batteries reaching 1000 cycles is considered outstanding. Solid-state batteries are known to have increased life cycles over lithium ion batteries: In the art, solid-state batteries are already produced with a life cycle expectancy than extends at least 5x that of lithium-ion batteries.

Hence, the current finding that the carbon nanofibres-comprising carbon networks are able to extend the number of cycles of lithium ion batteries without specific capacity loss to over at least 2300 makes these advantageous in solid-state batteries. It is especially thanks to these higher numbers of cycles that the present issues of life cycle of solid-state batteries can be addressed. Furthermore, the carbon networks are believed to reduce dendrite formation, which is a problem of solid-state batteries.

Furthermore, the inventors believe that when these networks are used in an anode-less solid-state battery, specifically in the cathode, in the solid matrix of the solid-state electrolyte, in the coating between the cathode and solid-state electrolyte, and/or in the coating between solid-state electrolyte and current collector, these are capable of overcoming the known drawbacks of solid-state batteries concerning volume expansion and interfacial delamination. The above findings of a high number of cycles without capacity loss is also advantageous for these anode-less solid-state batteries. Moreover, thanks to the porous network structure, the carbon networks according to the invention facilitate (lithium) ion movement and temporarily store (lithium) ions. These specific properties are particularly advantageous in anode-less solid-state batteries, wherein integration of the carbon network in the cathode, solid-state electrolyte, and/or optional coatings between cathode and solid-state electrolyte or solid-state electrolyte and current collector can assist (lithium) ion flow, improving cycling efficiency without a traditional anode, and prevent (lithium) dendrite formation, thus preserving battery performance over time.

Thanks to these characteristics, the carbon nanofibres-comprising carbon networks are believed to improve the life cycle of solid-state batteries significantly. The inventors have used these insights to come to the following aspects of the invention.

In a first aspect, the invention concerns the use of porous, chemically interconnected, carbon nanofibres-comprising carbon networks as electrochemically active material in an anode of a solid-state battery and/or as matrix material in a solid-state electrolyte of a solid-state battery.

In a further first aspect, the invention concerns the use of porous, chemically interconnected carbon nanofibres-comprising carbon networks in a coating between a cathode and a solid-state electrolyte and/or in a coating between an anode and a solid-state electrolyte of a solid-state battery and/or in a cathode of a solid-state battery. In a yet a further first aspect, the invention concerns the use of porous, chemically interconnected, carbon nanofibres-comprising carbon networks as electrochemically active material in a cathode of an anode-less solid-state battery, and/or as matrix material in a solid-state electrolyte of an anode-less solid-state battery, and/or in an optional coating between the cathode and the solid-state electrolyte of an anode-less solid-state battery, and/or in an optional coating between the solid-state electrolyte and the current collector of an anode-less solid-state battery.

In a particularly preferred embodiment, the invention concerns the use of porous, chemically interconnected, carbon nanofibres-comprising carbon networks as electrochemically active material in an anode of a solid-state battery, wherein the solid-state battery further comprises a solid polymer electrolyte, more preferably wherein the polymer is a thermoplastic polymer.

In another particularly preferred embodiment, the invention concerns the use of porous, chemically interconnected, carbon nanofibres-comprising carbon networks as electrochemically active material in a cathode of an anode-less solid-state battery.

For some jurisdictions, the first aspect of the invention is phrased as a method for maintaining the specific capacity of a solid state battery during its life cycle comprising providing porous, chemically interconnected, carbon nanofibres-comprising carbon networks in at least one of an anode, a cathode, a solid-state electrolyte, a coating between an anode and a solid-state electrolyte, and/or a coating between a cathode and a solid-state electrolyte of the solid-state battery.

For some jurisdictions, the further first aspect of the invention is phrased as a method for maintaining the specific capacity of an anode-less solid state battery during its life cycle comprising providing porous, chemically interconnected, carbon nanofibres-comprising carbon networks in at least one of a cathode, a solid-state electrolyte, a coating between a cathode and a solid-state electrolyte, and/or a coating between a solid-state electrolyte and a current collector of the anode-less solid-state battery.

In a second aspect, the invention concerns a solid-state battery anode comprising porous, chemically interconnected, carbon nanofibres-comprising carbon networks representing 2 - 100 wt%, preferably 5 - 100 wt%, of the total mass of the anode.

In a further second aspect, the invention concerns a (anode-less) solid-state battery cathode comprising porous, chemically interconnected, carbon nanofibres-comprising carbon networks representing 0.1 - 25 wt% of the total mass of the cathode.

In a third aspect, the invention concerns a solid-state electrolyte comprising porous, chemically interconnected, carbon nanofibres-comprising carbon networks representing 0.01 - 50 wt%, preferably 0.01 - 25 wt.%, preferably 0.05 - 50 wt%, most preferably 0.05 - 25 wt%, of the total mass of the solid-state electrolyte.

In a fourth aspect, the invention concerns a solid-state battery comprising
(i) an anode comprising porous, chemically interconnected, carbon nanofibres-comprising carbon networks representing 2 - 100 wt%, preferably 5 - 100 wt%, of the total mass of the anode, and preferably a solid-state electrolyte comprising a thermoplastic polymer; and/or
(ii) a solid-state electrolyte comprising porous, chemically interconnected, carbon nanofibres-comprising carbon networks representing 0.01 - 50 wt%, preferably 0.01 - 25 wt.%, preferably 0.05 - 50 wt%, most preferably 0.05 - 25 wt% of the total mass of the solid-state electrolyte.

In an alternative solid-state battery setup, use is made of coatings between the various parts of cathode, anode and electrolyte. Hence, preferably the solid-state battery further comprises a coating between the cathode and the solid-state electrolyte and/or a coating between the solid-state electrolyte and the anode, wherein the coating comprises porous, chemically interconnected, carbon nanofibres-comprising carbon networks. In an alternative solid-state battery setup, use is made of the carbon nanofibres-comprising carbon networks in the cathode of the solid-state battery. Hence, preferably the solid-state battery further comprises a cathode comprising porous, chemically interconnected, carbon nanofibres-comprising carbon networks.

In a further fourth aspect, the invention concerns an anode-less solid-state battery:
(i) comprising a cathode comprising porous, chemically interconnected, carbon nanofibres-comprising carbon networks representing 0.1 - 25 wt% of the total mass of the anode; and/or
(ii) comprising a solid-state electrolyte comprising porous, chemically interconnected, carbon nanofibres-comprising carbon networks representing 0.01 - 50 wt%, preferably 0.01 - 25 wt%, preferably 0.05 - 50 wt%, most preferably 0.05 - 25 wt% of the total mass of the solid-state electrolyte; and/or
(iii) optionally comprising a coating between the cathode and the solid-state electrolyte and/or a coating between the solid-state electrolyte and a current collector, the coating comprising porous, chemically interconnected, carbon nanofibres-comprising carbon networks.

In a fifth aspect, the invention concerns a battery-powered device comprising the solid-state battery of the fourth aspect of the invention, wherein said device is selected from smartphones, laptops, digital cameras and camcorders, medical and communication systems, Uninterruptible Power Supply (UPS), power plant energy storage, electric and/or hybrid vehicles, pacemakers, radio-frequency identification devices, drones and wearable devices such as trackers. In a further fifth aspect, the invention concerns a battery-powered device comprising the anode-less solid-state battery of the fourth aspect of the invention, wherein said device is selected from smartphones, laptops, digital cameras and camcorders, medical and communication systems, Uninterruptible Power Supply (UPS), power plant energy storage, electric and/or hybrid vehicles, pacemakers, radio-frequency identification devices, drones and wearable devices such as trackers.

In all aspects of the invention, when the anode comprises the porous, chemically interconnected, carbon nanofibres-comprising carbon networks as electrochemically active material, preferably it is used in a solid-state battery wherein the solid-state electrolyte comprises or preferably consists of a thermoplastic polymer.

In all aspects of the invention, the solid-state battery is preferably a lithium solid-state battery.

### List of preferred clauses

1. Use of porous, chemically interconnected, carbon nanofibres-comprising carbon networks
   - as electrochemically active material in an anode, and/or
   - as matrix material in a solid-state electrolyte, and/or
   - in a coating between an anode and a solid-state electrolyte, and/or
   - in a coating between a cathode and a solid-state electrolyte, and/or
   - as electrochemically active material in a cathode,
   of a solid-state battery.
2. Use according to clause 1, wherein said carbon nanofibres-comprising carbon networks represent 2 - 100 wt%, preferably more than 2 and less than 100 wt%, of the total mass of the anode.
3. Use of porous, chemically interconnected, carbon nanofibres-comprising carbon networks
   - as electrochemically active material in a cathode, and/or
   - as matrix material in a solid-state electrolyte, and/or
   - in a coating between a cathode and a solid-state electrolyte, and/or
   - in a coating between a solid-state electrolyte and a current collector,
   of an anode-less solid-state battery.
4. Use according to clause 3, wherein said carbon nanofibres-comprising carbon networks represent 0.1 - 25 wt.% of the total mass of the cathode.
5. Use according to any one of the preceding clauses, wherein the carbon nanofibres-comprising carbon networks represent 0.01 - 25 wt.% of the total mass of the solid-state electrolyte.
6. Use according to any one of the preceding clauses, wherein the solid-state electrolyte further comprises a polymer, preferably comprising a thermoplastic polymer.
7. Use according to clause 6, wherein the polymer is selected from polyethylene oxides, polyvinylidene fluorides, polyacrylonitriles, polyamides (such as non-woven polyamide fabrics), polycarbonates, polyesters, polynitriles, polyalcohols, polyamines, polysiloxanes, fluoropolymers, ionic conducting polymers, polyethylene oxide-co-lactic acid), biopolymers, or combinations thereof or co-polymers thereof.
8. Use according to clause 6 or 7, wherein Li salts are dissolved in the polymer.
9. Use according to any one of clauses 6-8, wherein the polymer has a Tg of less than 300 °C.
10. Use according to any one of the preceding clauses, wherein the solid-state electrolyte further comprises inorganic compounds, preferably selected from sulphide-based compounds, more preferably Li₂S-P₂S₅; oxide-based compounds, more preferably Lithium Lanthanum Zirconate (LLZO) and/or Lithium Garnet (Li₇La₃Zr₂O₁₂); phosphate-based compounds, more preferably Li₃PO₄; ceramics, more preferably NASICON (sodium superionic conductor); or combinations thereof.
11. Use according to any one of the preceding clauses, wherein the carbon network comprises crystalline carbon-nanofibres.
12. Use according to any one of the preceding clauses, wherein the average fibre length of the carbon nanofibres is 30 - 10,000 nm.
13. Use according to any one of the preceding clauses, wherein the carbon nanofibres-comprising carbon networks are porous carbon networks forming an intraparticle porous network,
   wherein the carbon nanofibres are interconnected to other carbon nanofibres in the network by chemical bonds via junctions,
   wherein the pores in the network have an intraparticle pore diameter size of 5-150 nm using Mercury Intrusion Porosimetry according to ASTM D4404-10, and
   wherein the carbon nanofibres have an average aspect ratio of fibre length-to-thickness of at least 2, preferably having a d-spacing in the range of 0.340 to 0.5 nm.
14. A solid-state battery anode comprising porous, chemically interconnected, carbon nanofibres-comprising carbon networks representing 2 - 100 wt%, preferably more than 2 and less than 100 wt%, of the total mass of the anode.
15. A (anode-less) solid-state battery cathode comprising porous, chemically interconnected, carbon nanofibres-comprising carbon networks representing 0.1 - 25 wt%, preferably more than 0.1 and less than 25 wt%, of the total mass of the cathode.
16. A solid-state electrolyte comprising porous, chemically interconnected, carbon nanofibres-comprising carbon networks representing 0.01 - 25 wt.% of the total mass of the solid-state electrolyte.
17. The solid-state battery anode according to clause 14, the (anode-less) solid-state battery cathode according to clause 15, or the solid-state electrolyte according to clause 16, wherein the porous carbon networks form an intraparticle porous network,
   wherein the carbon nanofibres are interconnected to other carbon nanofibres in the network by chemical bonds via junctions,
   wherein the pores in the network have an intraparticle pore diameter size of 5-150 nm using Mercury Intrusion Porosimetry according to ASTM D4404-10, and
   the carbon nanofibres have an average aspect ratio of fibre length-to thickness of at least 2, preferably having a d-spacing of 0.340 to 0.5 nm.
18. The solid-state battery anode according to clause 14 or 17, wherein the anode further contains 0.1 - 90 wt.% of an additional electrochemically active material, selected from metallic lithium, a material based on C, Si, Sn, Bi, Sb, a metal hydride, lithium titanate (Li₄Ti₅O₁₂), or a combination thereof, more preferably metallic lithium.
19. The (anode-less) solid-state battery cathode according to clause 15 or 17, wherein the cathode further contains
   - an additional electrochemically active material, selected from lithium oxides, lithium phosphates, lithium sulphides, or combinations thereof, more preferably selected from lithium cobalt oxide (LiCoO₂), lithium manganese oxide (LiMn₂O₄), lithium iron phosphate (LiFePO₄), .Li[NiₓCoₓMnₓ]O₂, Lithium Nickel Manganese Cobalt (NCM), or combinations thereof; and
   - optionally a matrix or binder selected from a polymeric material, a ceramic material, or a glass material.
20. The solid-state electrolyte according to clause 16 or 17, wherein the solid-state electrolyte further contains
   - a polymer, preferably selected from polyethylene oxides, polyvinylidene fluorides, polyacrylonitriles, polyamides (such as non-woven polyamide fabrics), polycarbonates, polyesters, polynitriles, polyalcohols, polyamines, polysiloxanes, fluoropolymers, ionic conducting polymers, polyethylene oxide-co-lactic acid), biopolymers, or combinations thereof or co-polymers thereof, and
   - Li salts.
21. A solid-state battery comprising the anode according to any one of clauses 14, 17, or 18 and/or the solid-state battery cathode according to any one of clauses 15, 17, or 19 and/or the solid-state electrolyte according to any one of clauses 16, 17, or 20.
22. An anode-less solid-state battery comprising the cathode according to any one of clauses 15, 17, or 19 and/or the solid-state electrolyte according to any one of clauses 16, 17, or 20.
23. A battery-powered device comprising the solid-state battery of clause 21 or the anode-less solid-state battery of clause 22, wherein said device is selected from smartphones, laptops, digital cameras and camcorders, medical and communication systems, Uninterruptible Power Supply (UPS), power plant energy storage, electric and/or hybrid vehicles, pacemakers, radio-frequency identification devices, drones, and wearable devices such as trackers.
24. Use according to any one of clauses 1 - 13, the solid-state battery anode according to any one of clauses 14, 17, or 18, the (anode-less) solid-state battery cathode according to any one of clauses 15, 17, or 19, the solid-state electrolyte according to any one of clauses 16, 17, or 20, the solid-state battery according to clause 21, the anode-less solid-state battery according to clause 22, or the device according to clause 23, wherein the carbon networks are obtainable by a process for producing crystalline carbon networks in a reactor (3) which contains a reaction zone (3b) and a termination zone (3c), by injecting a micro-emulsion of the water-in oil, oil-in-water or bicontinuous type (c), comprising metal catalyst nanoparticles, into the reaction zone (3b) which is at a temperature of above 600 °C, preferably above 700 °C, more preferably above 900 °C, even more preferably above 1000 °C, more preferably above 1100 °C, preferably up to 3000 °C, more preferably up to 2500 °C, most preferably up to 2000 °C, to produce crystalline carbon networks (e), transferring these networks (e) to the termination zone (3c), and quenching or stopping the formation of crystalline carbon networks in the termination zone by spraying in water (d).

### Figures

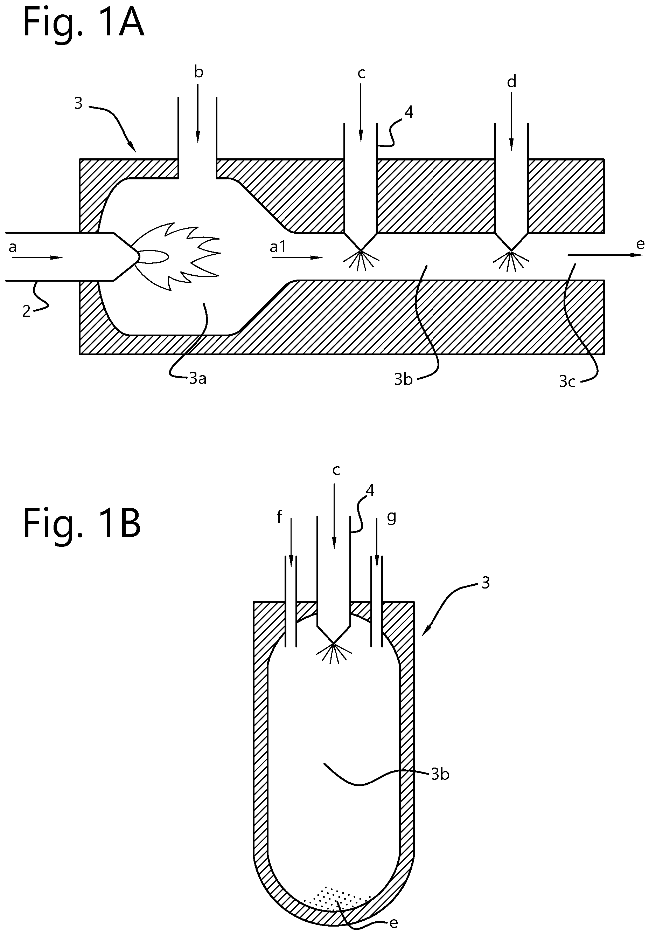

Fig. 1A is a schematic diagram of a continuous furnace carbon black producing process in accordance with the present invention which contains, along the axis of the reactor (3), a combustion zone (3a), a reaction zone (3b) and a termination zone (3c), by producing a stream of hot waste gas (a1) in the combustion zone by burning a fuel a in an oxygen-containing gas (b) and passing the waste gas (a1) from the combustion zone (3a) into the reaction zone (3b), spraying (atomizing) a single-phase emulsion c in the reaction zone (3b) containing the hot waste gas, carbonizing said emulsion at increased temperature, and quenching or stopping the reaction in the termination zone (3c) by spraying in water (d), to obtain crystalline carbon networks (e) according to the invention.
Fig. 1B is a schematic diagram of a semi-batch carbon black producing process where a single-phase emulsion c is atomized through a nozzle (4) at the top of the reactor (3) into the reactor zone (3b) at elevated temperatures, carbonizing said emulsion at the elevated temperature in the reactor zone (3b), and collecting the crystalline carbon networks (e) at the bottom of the reactor. Additionally two gas-inlets are present that enter the reactor from the top, for adding inert gas (f), preferably nitrogen for controlling and/or depletion of oxygen-levels, and for introducing a carbon-containing gas (g) into the reactor, preferably acetylene or ethylene.

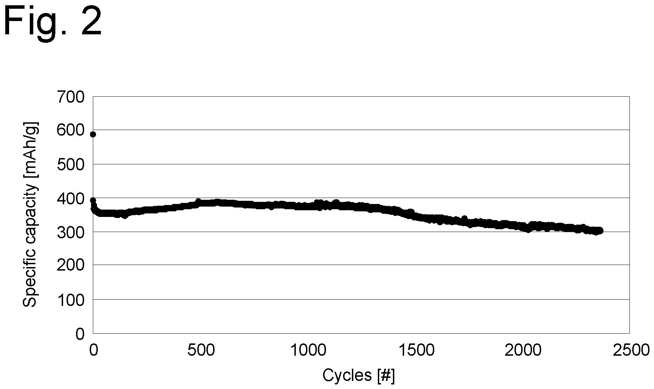

Fig. 2 shows capacity retention over cycles for a lithium ion battery comprising an anode comprising the porous, chemically interconnected, carbon nanofibres-comprising carbon networks. The y-axis shows the specific capacity, while the x-axis shows the number of cycles.

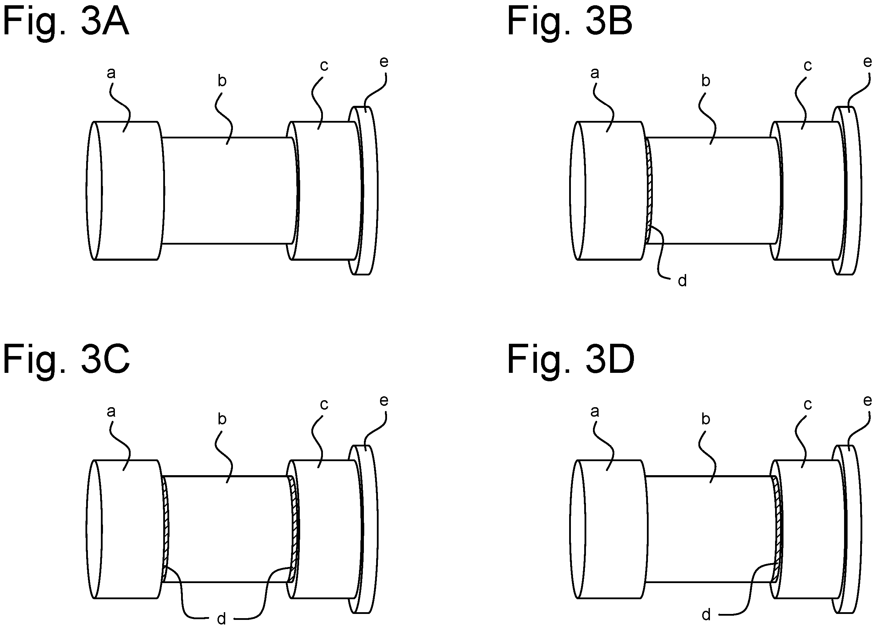

Fig. 3 is a schematic representation of a solid-state battery according to the invention. The dimensions are not to scale.
Fig. 3A represents a solid-state battery comprising a cathode (a), a solid-state electrolyte (b), an anode (c), and a current collector (e). At least one of the cathode (a), solid-state electrolyte (b), and anode (c) comprises the carbon nanofibres-comprising carbon networks according to the invention. Preferably the solid-state electrolyte (b) and/or anode (c) comprise the carbon nanofibres-comprising carbon networks according to the invention. More preferably, at least the anode (c) comprises the carbon nanofibres-comprising carbon networks according to the invention.
Fig. 3B represents a solid-state battery comprising a cathode (a), a solid-state electrolyte (b), an anode (c), a coating (d) between the cathode (a) and the solid-state electrolyte (b), and a current collector (e). At least one of the cathode (a), solid-state electrolyte (b), coating (d), and anode (c) comprises the carbon nanofibres-comprising carbon networks according to the invention. Preferably the anode (c) and/or coating (d) comprise the carbon nanofibres-comprising carbon networks according to the invention. More preferably, at least the anode (c) comprises the carbon nanofibres-comprising carbon networks according to the invention.
Fig. 3C represents a solid-state battery comprising a cathode (a), a solid-state electrolyte (b), an anode (c), a coating (d) between the cathode (a) and solid-state electrolyte (b), a coating (d) between the solid-state electrolyte (b) and anode (c), and a current collector (e). At least one of the cathode (a), solid-state electrolyte (b), both coatings (d), and anode (c) comprises the carbon nanofibres-comprising carbon networks according to the invention. Preferably the anode (c), and both coatings (d) comprise the carbon nanofibres-comprising carbon networks according to the invention. More preferably, at least the anode (c) comprises the carbon nanofibres-comprising carbon networks according to the invention.
Fig. 3D represents a solid-state battery comprising a cathode (a), a solid-state electrolyte (b), an anode (c), a coating (d) between the solid-state electrolyte (b) and the anode (c), and a current collector (e). At least one of the cathode (a), solid-state electrolyte (b), coating (d), and anode (c) comprises the carbon nanofibres-comprising carbon networks according to the invention. Preferably the anode (c) and/or coating (d) comprise the carbon nanofibres-comprising carbon networks according to the invention. More preferably, at least the anode (c) comprises the carbon nanofibres-comprising carbon networks according to the invention.
   In all embodiments of Fig. 3A-D, preferably the solid-state electrolyte comprises a polymeric material, more preferably a thermoplastic polymer. In all embodiments of Fig. 3A-D, preferably the coating comprises a polymeric material, more preferably a thermoplastic polymer. More details are provided in the detailed description.

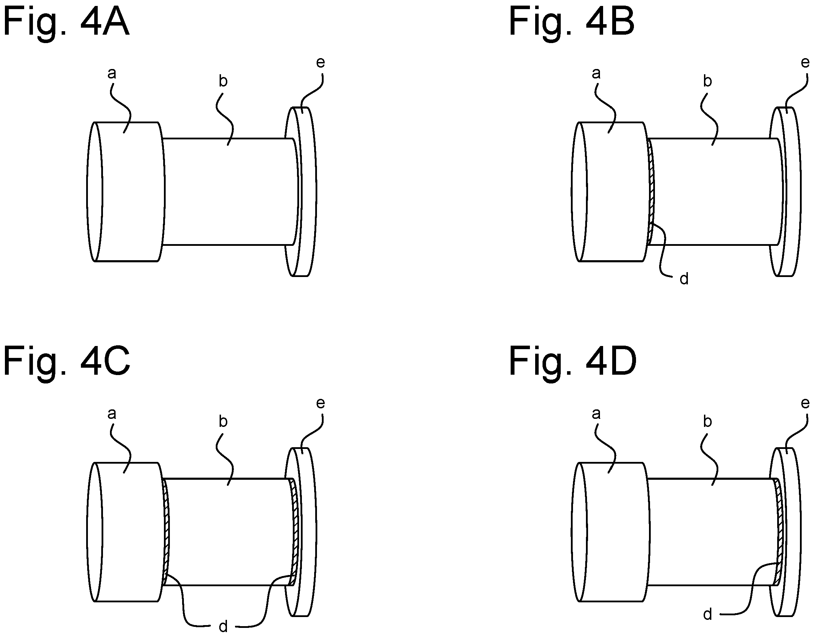

Fig. 4 is a schematic representation of an anode-less solid-state battery according to the invention. The dimensions are not to scale.
Fig. 4A represents an anode-less solid-state battery comprising a cathode (a), a solid-state electrolyte (b), and a current collector (e). At least one of the cathode (a) and solid-state electrolyte (b) comprises the carbon nanofibres-comprising carbon networks according to the invention. Preferably at least the cathode (a) comprises the carbon nanofibres-comprising carbon networks according to the invention.
Fig. 4B represents an anode-less solid-state battery comprising a cathode (a), a solid-state electrolyte (b), a coating (d) between the cathode (a) and the solid-state electrolyte (b), and a current collector (e). At least one of the cathode (a), solid-state electrolyte (b), and coating (d), comprises the carbon nanofibres-comprising carbon networks according to the invention. Preferably at least the cathode (a) and/or coating (d) comprise the carbon nanofibres-comprising carbon networks according to the invention.
Fig. 4C represents an anode-less solid-state battery comprising a cathode (a), a solid-state electrolyte (b), a current collector (e), a coating (d) between the cathode (a) and the solid-state electrolyte (b), and a coating (d) between the solid-state electrolyte (b) and the current collector (e). At least one of the cathode (a), solid-state electrolyte (b), and the coatings (d) comprises the carbon nanofibres-comprising carbon networks according to the invention. Preferably all of the cathode (a) and both coatings (d) comprise the carbon nanofibres-comprising carbon networks according to the invention.
Fig. 4D represents an anode-less solid-state battery comprising a cathode (a), a solid-state electrolyte (b), a current collector (e), and a coating (d) between the solid-state electrolyte (b) and the current collector (e). At least one of the cathode (a), solid-state electrolyte (b), and coating (d) comprises the carbon nanofibres-comprising carbon networks according to the invention. Preferably the coating (d) comprises the carbon nanofibres-comprising carbon networks according to the invention. Fig. 4D represents the most preferred setup of the anode-less solid-state battery.

In all embodiments of Fig. 4A-D, preferably the solid-state electrolyte comprises a polymeric material, more preferably a thermoplastic polymer. In all embodiments of Fig. 4A-D, preferably the coating comprises a polymeric material, more preferably a thermoplastic polymer. More details are provided in the detailed description.

### Detailed description

### Definitions

The term "electrochemically active material" as used herein refers to a material which is electrically conductive and can be employed as anode material.

The terms "solid matrix" or "matrix" of a solid-state electrolyte as used herein are interchangeable and refer to the solid material forming the solid-state electrolyte and solubilising the electrochemically active salt. The solid-state electrolyte are classified based on the material which is the major component of the solid matrix. For example, a solid-state electrolyte wherein the solid matrix mainly consists of a polymer is a solid polymer electrolyte.

The term "chemically interconnected" as used herein refers to the nanofibres within the carbon nanofibres-comprising carbon networks being covalently bonded to one another. The term "chemically interconnected" as used herein is distinct from physical aggregates wherein the carbon nanofibres are physically aggregated and bundles together but are not connected by covalent bonds.

### Carbon nanofibres-comprising carbon networks

The porous, chemically interconnected carbon nanofibres-comprising carbon networks or porous carbon networks comprising chemically interconnected carbon nanofibres are preferably characterized as follows.

The skilled person will understand that a porous network refers to a 3-dimensional structure that allows fluids or gasses to pass through. A porous network may also be denoted as a porous medium or a porous material. A porous crystalline carbon network according to the invention (or a porous carbon network particle of the invention) can be seen as a big molecule, wherein the carbon atoms inherently are covalently interconnected. It is hereby understood that a porous carbon network particle is a particle with chemically interconnected (i.e. covalently bonded) fibres having intraparticle porosity, as opposed to interparticle porosity which refers to a porous network created by multiple molecules or particles and wherein the pores are formed by the space between physically aggregated particles or molecules. In the context of the current invention, intraparticle porosity may also be denoted as intramolecular porosity as the carbon network particle according to the invention can be seen as a big molecule, wherein the pores are embedded. Hence intraparticle porosity and intramolecular porosity have the same meaning in the current text and may be used interchangeably.

As the networks of the invention can be seen as one big molecule, there is no need to fuse particles or parts of the network together. Hence it is preferred that the porous, chemically interconnected, carbon nanofibres-comprising carbon networks are non-fused, intra particle porous, chemically interconnected, crystalline carbon nanofibres-comprising carbon networks, having intraparticle porosity. Without being bound to a theory, it is believed that the benefit of having a crystalline network with intraparticle porosity over a(n amorphous) network with interparticle porosity is that the first are more robust and more resilient against crushing and breaking when force is applied. For comparison sake, carbon black consists of aggregates or agglomerates of spherical particles that may form a 3-dimensional structure, where spheres are fused with amorphous connections with weaker porosity. The interparticle pores are weaker due to the particle-particle interface and tend to collapse. Intraparticle pores are strong due to the covalently crystalline aligned bonded structure surrounding them and can withstand high forces and pressures without collapsing. This is sharp contrast with conventional carbon black, consisting of aggregates or agglomerates of spherical particles that may form a 3-dimensional structure, where spheres are fused with amorphous connection between the individual particles (not chemically 'interconnected'). Summarizing, intraparticle porosity (a trademark for the networks of the invention) refers to the situation wherein the carbon atoms surrounding the pores are covalently connected in crystalline form, wherein interparticle porosity refers to pores residing between particles which are physically aggregated, agglomerated, or have amorphous connections.

Intraparticle pore volume may be characterized in terms of Mercury Intrusion Porosimetry (ASTM D4404-10) or Nitrogen Absorption method (ISO 9277:10). The pore volume of the porous carbon networks according to the invention is 0.05- 5 cm3/g, preferably 0.1- 4 cm3/g, more preferably 0.3 - 3.5 cm3/g and most preferably 0.5 - 3 cm3/g as measured using Mercury Intrusion Porosimetry (ASTM D4404-10). Additionally or alternatively, the carbon nanofibres-comprising carbon networks may be characterized having an intraparticle pore diameter size as measured using Mercury Intrusion Porosimetry (ASTM D4404-10) of 5 - 200 nm, preferably 5 - 150 nm, more preferably 10 - 150 nm, even more preferably of 10 - 130 nm, most preferably 20 - 130 nm. Following the same ASTM test method, the networks may have an interparticle pore diameter of 10 - 500 µm, more preferably 80 - 400 µm.

The porous, chemically interconnected carbon nanofibres-comprising carbon networks are preferably characterized by a d-spacing of 0.34-0.5 nm, more preferably of 0.35-0.45 nm, even more preferably of 0.355-0.375 nm. d-spacing is measured according to XRD. Crucially, this d-spacing facilitates the intercalation of ions, such as lithium or sodium ions.

The skilled person will readily understand that the term chemically interconnected in porous, chemically interconnected, carbon nanofibres-comprising carbon networks implies that the carbon-nanofibres are interconnected to other carbon-nanofibres by chemical bonds. It is also understood that a chemical bond is a synonym for a molecular or a covalent bond. Typically those places where the carbon-nanofibres are connected are denoted as junctions or junctions of fibres, which may thus be conveniently addressed as 'covalent junctions' These terms are used interchangeable in this text. In the carbon networks according to the invention, the junctions are formed by covalently connected carbon atoms. It furthermore follows that the length of a fibre is defined as the distance between junctions which are connected by fibrous carbon material.

In a preferred embodiment, at least part of the fibres in the carbon nanofibres-comprising carbon networks of the invention are crystalline carbon nanofibres. Preferably at least 20 wt.% of the carbon in the carbon networks in the invention is crystalline, more preferably at least 40 wt.%, even more preferably at least 60 wt.%, even more preferably at least 80 wt.% and most preferably at least 90 wt.%. Alternatively the amount of crystalline carbon is 20-90 wt.%, more preferably 30-70 wt.%, and more preferably 40-50 wt.% compared to the total carbon in the carbon networks of the invention. Here 'crystalline' has its usual meaning and refers to a degree of structural order in a material. In other words the carbon atoms in the nanofibres are to some extent arranged in a regular, periodic manner. The areas or volumes which are crystalline can be denoted as crystallites. A carbon crystallite is hence an individual carbon crystal.

A measure for the size of the carbon crystallites is the stacking height of graphitic layers. Standard ASTM grades of carbon black have a stacking height of the graphitic layers within these crystallites ranging from 11-13 Å (angstroms). In a preferred embodiment, the carbon nanofibres-comprising carbon networks of the invention preferably have a stacking height of at least 15 Å (angstroms), preferably at least 16 Å, more preferably at least 17 Å, even more preferably at least 18 Å, even more preferably at least 19 Å and still more preferably at least 20 Å. If needed the carbon networks with crystallites as large as 100 Å (angstroms) can be produced. Hence the carbon networks of the invention have a stacking height of 15 - 100 Å (angstroms), more preferably of up to 80 Å, even more preferably of up to 60 Å, even more preferably of up to 40 Å, still more preferably of up to 30 Å. It is therefore understood that the stacking height of graphitic layers within crystallites in the carbon networks of the invention is 15-90 Å (angstroms), more preferably 16-70 Å, even more preferably 17-50 Å, still more preferably 18-30 Å and most preferably up to 25 Å.

The porous, chemically interconnected, carbon nanofibres-comprising carbon networks may be defined as having chemically interconnected carbon nanofibres, wherein carbon nanofibres are interconnected via junction parts, wherein several (typically 3 or more, preferably at least 10 or more) nanofibres are covalently joined. Said carbon nanofibres are those parts of the network between junctions. The fibres typically are elongated bodies which are solid (i.e. non-hollow), preferably having an average diameter or thickness of 1 - 500 nm, preferably of 5 - 350 nm, more preferably up to 100 nm, in one embodiment 10 - 100 nm, compared to the average particle size of 10 - 400 nm for carbon black particles. In one embodiment, the average fibre length (i.e. the average distance between two junctions) is preferably in the range of 30 - 10,000 nm, more preferably 50 - 5,000 nm, more preferably 100 - 5,000 nm, more preferably at least 200 - 5,000 nm, as for instance can be determined using SEM.

The nanofibres or structures may preferably be described in terms of an average aspect ratio of fibre length-to-thickness of at least 2, preferably at least 3, more preferably at least 4, and most preferably at least 5, preferably at most below 50; in sharp contrast with the amorphous (physically associated) aggregates formed from spherical particles obtained through conventional carbon black manufacturing. The average aspect ratio of fibre length-to-thickness can be determined for instance using SEM.

The carbon nanofibres structures may be defined as carbon networks formed by chemically interconnected (covalently bonded) carbon nanofibres. Said carbon networks have a 3-dimensional configuration wherein there is an opening between the carbon nanofibres (the intraparticle porosity, see above) that is accessible to a continuous phase, which may be a liquid - such as a solvent or an aqueous phase -, a gas or any other phase. Said carbon networks are at least 0.5 µm in diameter, preferably at least 1 µm in diameter, preferably at least 5 µm in diameter, more preferably at least 10 µm in diameter, even more preferably at least 20 µm in diameter and most preferably at least 25 µm in all dimensions. Alternatively said carbon networks are at least 1 µm in diameter in 2 dimensions and at least 5 µm in diameter, preferably at least 10 µm in diameter, more preferably a least 20 µm in diameter and most preferably at least 25 µm in diameter in the other dimension. Here, and also throughout this text, the term dimension is used in its normal manner and refers to a spatial dimension. There are 3 spatial dimensions which are orthogonal to each other and which define space in its normal physical meaning. It is furthermore possible that said carbon networks are at least 10 µm in diameter in 2 dimensions and at least 15 µm in diameter, preferably at least 20 µm in diameter, more preferably a least 25 µm in diameter, more preferably at least 30 µm in diameter and most preferably at least 50 µm in diameter in the other dimension. These measurements are based on laser diffraction.

The carbon nanofibres-comprising carbon networks may have a volume-based aggregate size as measured using laser diffraction (ISO 13320-1) or dynamic light scattering analysis of 0.1 - 100 µm, preferably 1 - 50 µm, more preferably 1 - 40 µm, more preferably of 5 - 35 µm, more preferably of 5 - 25 µm and most preferably of 5 - 20 µm. In a most preferred embodiment, the networks have a volume-based aggregate size as measured using laser diffraction (ISO 13320-1) or dynamic light scattering analysis of 5 - 10 µm. The networks preferably have an advantageously narrow filament diameter size distribution, particularly compared to traditional carbon black. The filament diameter size distribution may be characterized between 10 and 200 nm, preferably 10 - 100 nm as determined using the transmission electronic microscope and measuring the diameter of the fibres. The networks may be characterized by an aggregate strength between 0.5 and 1, more preferably between 0.6 and 1, as determined by the c-OAN/OAN ratio measured according to ASTM D3493-16/ASTM D2414-16 respectively. The c-OAN is preferably 20 - 200 cc/100g. This is an advantageously high strength which prevents collapse of the intra-porosity even in high-pressure applications.

The carbon nanofibres-comprising carbon networks may be characterized by Raman spectroscopy. Preferably in Raman spectroscopy, the carbon nanofibres-comprising carbon networks exhibit two partly overlapping signals (but yet distinguishable) in the wavelength region of 1000-2000 cm⁻¹, and a broad third signal in the wavelength region of 1800 - 3500 cm⁻¹; wherein a signal is typically identified by having a signal-to-noise ratio of at least 5, more preferably at least 10, more preferably at least 20. The broad signal may be characterized having a signal width at half-height of at least 100 cm⁻¹, preferably 100-800 cm⁻¹, more preferably 100 - 400 cm⁻¹. In one embodiment, the signal width at half-height is at least 300 cm⁻¹, preferably up to 1000 cm⁻¹. Raman spectroscopy can be performed in any manner known in the art.

The porous, chemically interconnected, carbon nanofibres-comprising carbon networks may also comprise carbon black particles built in as part of the network. These particles are profoundly found at the junctions between carbon nanofibres, but there may also be carbon black particles present at other parts of the network. The carbon black particles preferably have a diameter of at least 0.5 times the diameter of the carbon nanofibres, more preferably at least the same diameter of the carbon nanofibres, even more preferably at least 2 times the diameter of the carbon nanofibres, even more preferably at least 3 times the diameter of the carbon nanofibres, still more preferably at least 4 times the diameter of the carbon nanofibres and most preferably at least 5 times the diameter of the carbon nanofibres. It is preferred that the diameter of the carbon black particles is at most 10 times the diameter of the carbon nanofibres. Such mixed networks are denoted as hybrid networks.

The porous, chemically interconnected, carbon nanofibres-comprising carbon networks have a functionalized surface. In other words, the surface comprises groups that alter the hydrophobic nature of the surface - which is typical for carbon - to a more hydrophilic nature. The surface of the carbon networks comprises carboxylic groups, hydroxylic groups and phenolics. These groups add some polarity to the surface and may change the properties of the compound material in which the functionalized carbon networks are embedded. The surface area of the carbon nanofibres-comprising carbon networks as measured according to the Brunauer, Emmett and Teller (BET) method (ISO 9277:10) is preferably in the range of 15 - 300 m²/g, more preferably 20 - 270 m²/g, even more preferably 30 - 250 m²/g and most preferably 30 - 210 m²/g.

The porous, chemically interconnected, carbon nanofibres-comprising carbon networks comprise metal catalyst nanoparticles, but only in minute amounts, typically at least 10 ppm based on the weight of the carbon nanofibres-comprising carbon networks. These are a fingerprint of the preparation method. There is preferred an amount of at most 5000 ppm, more preferably at most 3000 ppm, especially at most 2000 ppm of metal nanoparticles based on the weight of the networks measured by ICP-OES (Inductive Coupled Plasma- Optical Emission Spectrometry). These metal particles are also embedded in the networks. These particles may have an average particle size between 1 nm and 100 nm. Preferably said particles are monodisperse particles having deviations from their average particle size which are within 10 %, more preferably within 5 %. Non-limiting examples of nanoparticles included in the carbon nanofibres-comprising carbon networks are the noble metals (Pt, Pd, Au, Ag), iron-family elements (Fe, Co and Ni), Ru, and Cu. Suitable metal complexes may be (i) platinum precursors such as H₂PtCl₆; H₂PtCl₆.xH₂O; K₂PtCl₄; K₂PtCl₄.xH₂O; Pt(NH₃)₄(NO₃)₂; Pt(C₅H₇O₂)₂, (ii) ruthenium precursors such as Ru(NO)(NO₃)₃; Ru(dip)₃Cl₂ [dip = 4,7-diphenyl-1,10-fenanthroline]; RuCl₃, or (iii) palladium precursors such as Pd(NO₃)₂, or (iv) nickel precursors such as NiCl₂ or NiCl₂.xH₂O; Ni(NO₃)₂; Ni(NO₃)₂.xH₂O; Ni(CH₃COO)₂; Ni(CH₃COO)₂.xH₂O; Ni(AOT)₂ [AOT = bis(2-ethylhexyl)sulphosuccinate], wherein x may be any integer chosen from 1, 2, 3, 4, 5, 6, 7, 8, 9 or 10 and typically may be 6, 7 or 8.

The porous, chemically interconnected, carbon nano fibres-comprising carbon networks are preferably obtainable by the process for the production of crystalline carbon networks in a reactor (3) which contains a reaction zone (3b) and a termination zone (3c), by injecting a thermodynamically stable micro-emulsions of the water-in-oil, oil-in-water or bicontinuous type (c), preferably a water-in-oil or bicontinuous micro-emulsion (c), a bicontinuous micro-emulsion (c), said micro-emulsion comprising metal catalyst nanoparticles, into the reaction zone (3b) which is at a temperature of above 600 °C, preferably above 700 °C, more preferably above 900 °C, even more preferably above 1000 °C, more preferably above 1100 °C, preferably up to 3000 °C, more preferably up to 2500 °C, most preferably up to 2000 °C, to produce crystalline carbon networks (e), transferring these networks e to the termination zone (3c), and quenching or stopping the formation of crystalline carbon networks in the termination zone by spraying in water (d).

In a more preferred embodiment, the networks are obtainable by the above process, said reactor being a furnace carbon black reactor (3) which contains, along the axis of the reactor (3), a combustion zone (3a), a reaction zone (3b) and a termination zone (3c), by producing a stream of hot waste gas (a1) in the combustion zone by burning a fuel a in an oxygen-containing gas (b) and passing the waste gas (a1) from the combustion zone (3a) into the reaction zone (3b), spraying a micro-emulsion of the water-in-oil, oil-in-water or bicontinuous type (c), preferably a water-in-oil or bicontinuous micro-emulsion (c), most preferably a bicontinuous micro-emulsion (c), said micro-emulsion comprising metal catalyst nanoparticles, in the reaction zone (3b) containing the hot waste gas, carbonizing said emulsion at a temperature of above 600 °C, preferably above 700 °C, more preferably above 900 °C, even more preferably above 1000 °C, more preferably above 1100 °C, preferably up to 3000 °C, more preferably up to 2500 °C, most preferably up to 2000 °C, and quenching or stopping the reaction in the termination zone (3c) by spraying in water (d), to yield crystalline carbon networks (e).

The networks are preferably obtainable by the above process wherein further processing details are provided in the section headed "Process for obtaining carbon nanofibres-comprising carbon networks" here below, and in Figure 1A.

### Use of the carbon nanofibres-comprising carbon networks in solid-state batteries

In the first aspect, the invention concerns the use of porous, chemically interconnected, carbon nanofibres-comprising carbon networks as electrochemically active material in an anode of a solid-state battery and/or as matrix material in a solid-state electrolyte of a solid-state battery. Preferably, the solid-state battery is a lithium solid-state battery. In a further first aspect, the invention concerns the use of porous, chemically interconnected carbon nanofibres-comprising carbon networks in a coating between a cathode and a solid-state electrolyte and/or in a coating between a anode and a solid-state electrolyte of a solid-state battery. Preferably the coating further comprises a thermoplastic material. The carbon networks facilitate a stronger interface between the cathode and/or anode and the coating, but also with the thermoplastic material in the coating itself. In a further preferred embodiment, the invention concerns the use of porous, chemically interconnected, carbon nanofibres-comprising carbon networks as electrochemically active material in a cathode of a solid-state battery. For some jurisdictions, the first aspect of the invention is phrased as a method for maintaining the specific capacity of a solid state battery during its life cycle comprising providing porous, chemically interconnected, carbon nanofibres-comprising carbon networks in at least one of an anode, a cathode, a solid-state electrolyte, a coating between an anode and a solid-state electrolyte, and/or a coating between a cathode and a solid-state electrolyte of the solid-state battery.

In a preferred embodiment, the invention concerns the use of porous, chemically interconnected, carbon nanofibres-comprising carbon networks as matrix material in a solid-state electrolyte of a solid-state battery. In a particularly preferred embodiment, the invention concerns the use of porous, chemically interconnected, carbon nanofibres-comprising carbon networks as electrochemically active material in an anode of a solid-state battery, wherein the solid-state battery further comprises a solid polymer electrolyte, more preferably wherein the polymer is a thermoplastic polymer.

The use of the carbon nanofibres-carbon networks in solid-state batteries according to the invention has several advantages. Without wishing to be bound to a theory, the carbon nanofibres-comprising carbon networks limit (lithium) dendrites formation by providing a more uniform surface for lithium deposition.

The carbon nanofibres-comprising carbon networks are believed to limit the issues related to volume expansion. Without wishing to be bound to a theory, the carbon network comprising intraparticle porosity provides a 3D scaffold which is able to accommodate expansion and contraction. The intraparticle pores are stronger than interparticle pores thanks to the covalent bonds creating the carbon nanofibres networks. Hence, such pores have less tendency to collapse when compressed. At the same time, the intraparticle porous network has enough empty volume to accommodate expansion and contraction.

The carbon nanofibres-comprising carbon networks of the invention are compatible with a variety of solid-state electrolytes, thus reducing delamination issues and promoting smoother lithium ion transport. In particular, the carbon nanofibres-comprising carbon networks are form mechanically stable and resistant composites with thermoplastic polymers. As such, the carbon networks are advantageous as part of the solid matrix of the electrolytes.

The strong interaction between the carbon networks and thermoplastic polymers also advantageously provides mechanically strong and resistant layer - layer composite interfaces, which is believed to be a result of the strong interaction between the carbon networks and the thermoplastic. Hence, the carbon networks can be advantageously used as electrochemically active material in the anode of solid state batteries, wherein preferably the solid-state electrolyte is a thermoplastic polymer electrolyte. The inventors believe that such configuration affords stable interfaces between the solid-state electrolyte and the anode, with improved interface stability.

Preferably, the carbon nanofibres-comprising carbon networks employed in the use according to the invention have the characteristics mentioned above in the paragraph "carbon nanofibres-comprising carbon networks".

### Use of the carbon nanofibres-comprising carbon networks in anode-less solid-state batteries

In a further first aspect, the invention concerns the use of porous, chemically interconnected, carbon nanofibres-comprising carbon networks as electrochemically active material in a cathode of an anode-less solid-state battery, and/or as matrix material in a solid-state electrolyte of an anode-less solid-state battery, and/or in a coating between a cathode and a solid-state electrolyte of an anode-less solid-state battery, and/or in a coating between a solid-state electrolyte and a current collector of an anode-less solid-state battery. Preferably, the anode-less solid-state battery is a lithium anode-less solid-state battery. For some jurisdictions, the further first aspect of the invention is phrased as a method for maintaining the specific capacity of an anode-less solid state battery during its life cycle comprising providing porous, chemically interconnected, carbon nanofibres-comprising carbon networks in at least one of a cathode, a solid-state electrolyte, a coating between a cathode and a solid-state electrolyte, and/or a coating between a solid-state electrolyte and a current collector of the anode-less solid-state battery.

In a preferred embodiment, the invention concerns the use of porous, chemically interconnected, carbon nanofibres-comprising carbon networks as electrochemically active material in a cathode of an anode-less solid-state battery and/or in a coating between a cathode and a solid-state electrolyte of an anode-less solid-state battery.

In a most preferred embodiment, the invention concerns the use of porous, chemically interconnected, carbon nanofibres-comprising carbon networks in a coating between a solid-state electrolyte and a current collector of an anode-less solid-state battery.

The strong interaction between the carbon networks and thermoplastic polymers also advantageously provides mechanically strong and resistant layer - layer composite interfaces, which is believed to be a result of the strong interaction between the carbon networks and the thermoplastic. Hence, the carbon networks can be advantageously used
- as electrochemically active material in the cathode of an anode-less solid state battery, wherein preferably the battery further comprises a solid-state electrolyte which is a thermoplastic polymer electrolyte; or
- as electrochemically active material in the cathode of an anode-less solid state battery, wherein preferably the battery further comprises a coating between the cathode and a solid-state electrolyte, wherein the coating comprises a thermoplastic polymer; or
- in a coating between a solid-state electrolyte and a current collector of an anode-less solid-state battery.

The inventors believe that such configuration affords stable interfaces between the solid-state electrolyte and the cathode, or the solid-state electrolyte and the current collector, with improved interface stability.

As discussed above for solid-state batteries in general, the use of the carbon nanofibres-carbon networks in solid-state batteries according to the invention has several advantages. Without wishing to be bound to a theory, the carbon networks limit (lithium) dendrites formation by providing a uniform surface for (lithium) ions deposition and by temporarily storing and buffering (lithium) ions in the porous network structure.

Thanks to their 3D porous network structure, the carbon nanofibres-comprising carbon networks facilitate (lithium) ions movement thus assisting with (lithium) ions flow. This property is particularly beneficial when the carbon networks are incorporated in the cathode of an anode-less solid-state battery. In this configuration, the (lithium) ions flow from the cathode to the current collector during charge and back to the cathode during discharge. Thus, cycling efficiency is improved by the carbon networks even without a traditional anode present.

As discussed above, the carbon nanofibres-comprising carbon networks are believed to limit the issues related to volume expansion thanks to their 3D scaffold which is able to accommodate expansion and contraction, intraparticle pores having a low tendency to collapse when compressed, and empty volume to accommodate expansion and contraction. Anode-less solid-state batteries are particularly high-energy density designs, where structural failure due to volumetric changes is a particular issue. Thanks to their intraparticle porous networks, the carbon networks enhance structural integrity in high-energy density anode-less solid-state batteries.

The carbon nanofibres-comprising carbon networks of the invention are compatible with a variety of solid-state electrolytes, thus reducing delamination issues and promoting smoother lithium ion transport.

Preferably, the carbon nanofibres-comprising carbon networks employed in the use according to the invention have the characteristics mentioned above in the paragraph "carbon nanofibres-comprising carbon networks".

### Anode comprising the carbon nanofibres-comprising carbon networks

In the second aspect, the invention concerns a solid-state battery anode comprising porous, chemically interconnected, carbon nanofibres-comprising carbon networks representing 2 - 100 wt%, preferably 5 - 100 wt%, of the total mass of the anode.

In a preferred embodiment, the anode essentially consists of the networks according to the invention, preferably at least 80 wt%, more preferably at least 90 wt%, most preferably 95 - 100 % of the weight of the anode.

While it is particularly advantageous to use these networks as the sole anode active material, even partial replacement of the anode active material brings about improved properties. Therefore, the invention also pertains to an anode for a lithium or a sodium battery comprising porous, chemically interconnected, carbon nanofibres-comprising carbon networks in an amount of 2 -100 wt%, preferably 5 - 100 wt%, preferably more than 2 wt% and less than 100 wt%, more preferably 20 - 95 wt%, even more preferably 40- 90 wt% of the anode, the remainder preferably being additional anode materials capable of intercalation and release of lithium or sodium ions. Preferably, the anode according to the invention may contain 0.1 - 90 wt%, preferably 0.1 - 30 wt%, most preferably 0.1 -10 wt% of an additional active material. The additional active material is preferably selected from a metal, a metal oxide, a carbon-based material such as graphite, a material based on Si, Sn, Bi, or Sb, a metal hydride, a metal alloy such as tin, a silicon based metal alloys, silicon or silicon-based compounds such as SiO₂, and/or a conversion compound such as transition-metal oxides (MO, where M is Sn, Mo, Ga, Zn, Si, Ge, Co, Ni, Cu or Fe).

For lithium solid-state batteries, preferably the additional active material in the anode is metallic lithium, a material based on C, Si, Sn, Bi, Sb, a metal hydride, lithium titanate (Li₄Ti₅O₁₂), or combinations thereof, more preferably metallic lithium.

In addition, the carbon networks admit a higher level of Fe and/or other metals without causing issues, which enhances the industrial applicability and safety of the anodes. The carbon network according to the invention also comprises a large distance interlayer, which enables to keep the viscosity reduced, even when used in high amounts in the anode. In fact, the carbon networks of the invention can be added with increased amounts without affecting viscosity disadvantageously.

The solid-state anode according to the invention may comprise conventional additives (non-active materials) on top of the porous, chemically interconnected, carbon nanofibres-comprising carbon networks to further improve the electrochemical performance of the solid-state batteries according to the invention. In particular, these additives can be added to construct a conductive percolation network to increase and keep the electronic conductivity of electrode, enabling it to charge and discharge faster, and to absorb and retain electrolyte, allowing an intimate contact between the lithium or sodium ions and active materials. It is considered within the skilled person ambit to select suitable conductive additives available in the art. In a preferred embodiment, the solid-state anode according to the invention may comprise 0.1 - 10 wt%, preferably 0.1 - 5.0 wt%, most preferably 0.1 - 3.0 wt% of one or more conductive additives selected from superconducting carbon, conductive carbon black, carbon dots, Super P, acetylene black, carbon nanofibres, graphene and carbon nanotubes, all of which present superior properties such as low weight, high chemical inertia and high specific surface area. In a preferred embodiment, the conductive additive is carbon black.

Binder materials are responsible for holding the active material particles within the electrode of a solid-state battery together to maintain a strong connection between the electrode and the contacts. These binding materials are normally inert and have an important role in the manufacturability of the battery. The solid-state anode according to the invention may comprise 0.1-10 wt%, preferably 2-8 wt%, most preferably 4-6 wt% of a binder, such as Styrene Butadiene Rubber (SBR), water-based acrylic resin (water-based acrylic resin), carboxymethyl cellulose (CMC), polyvinylidene fluoride (PVDF), Polytetrafluoroethylene (PTFE), ethylene-vinyl acetate copolymer (EVA), and polyvinyl alcohol (PVA).

Preferably, the binder is selected from SBR based and PVDF-based binders. Most preferably, the binder is PVDF-based.

In a most preferred embodiment, the solid-state anode comprising porous, chemically interconnected carbon nanofibres-comprising carbon networks is used in a solid-state battery wherein the solid-state electrolyte comprises a thermoplastic polymer, and more preferably lithium salts are dissolved in the thermoplastic polymer.

The skilled person will understand that the embodiment described herein for the solid-state battery anode according to the invention equally apply to the use of a porous, chemically interconnected carbon nanofibres-comprising carbon networks as electrochemically active material in an anode of a solid-state battery according to the invention and to the battery according to the invention.

### Cathode comprising the carbon nanofibres-comprising carbon networks

In a further second aspect, the invention concerns a solid-state battery cathode comprising porous, chemically interconnected, carbon nanofibres-comprising carbon networks representing 0.1 - 25 wt% of the total mass of the cathode. Preferably the cathode is an anode-less solid-state battery cathode.

Preferably the carbon nanofibres-comprising carbon networks represent more than 0.1 wt% and less than 25 wt%, more preferably 0.1 - 20 wt.%, most preferably 0.2 - 10 wt.% of the total mass of the cathode.

Preferably the cathode further comprises an electrochemically active material, preferably selected from lithium oxides, lithium phosphates, lithium sulphides, or combinations thereof. Preferably the cathode comprises one or more of lithium cobalt oxide (LiCoO₂), lithium manganese oxide (LiMn₂O₄), lithium iron phosphate (LiFePO₄), .Li[NiₓCoₓMnₓ]O₂, or Lithium Nickel Manganese Cobalt (NCM). Preferably the cathode comprises a matrix or binder based on a polymeric material, a ceramic material, or a glass material.

The skilled person will understand that the embodiment described herein for the anode-less solid-state battery anode according to the invention equally apply to the use of a porous, chemically interconnected carbon nanofibres-comprising carbon networks as electrochemically active material in a cathode of a (anode-less) solid-state battery according to the invention and to the battery according to the invention.

### Solid-state electrolyte

In a third aspect, the invention concerns a solid-state electrolyte comprising porous, chemically interconnected, carbon nanofibres-comprising carbon networks representing 0.01 - 25 wt.% of the total mass of the solid-state electrolyte.

Preferably the a porous, chemically interconnected, carbon nanofibres-comprising carbon networks represents 0.01 - 50 wt%, more preferably 0.01 - 25 wt.%, preferably 0.05 - 50 wt%, more preferably 0.05 - 25 wt%, even more preferably 1 - 40 wt.%, even more preferably 1 - 25 wt.%, even more preferably 5-20 wt.% of the total mass of the solid-state electrolyte.

The solid-state electrolyte according to the invention comprises further materials other than the carbon nanofibres-comprising carbon networks of the invention.

Preferably the solid-state electrolyte is selected from an inorganic solid electrolyte (ISE), a solid polymer electrolyte (SPE), a composite solid electrolyte, or a quasi solid-state electrolyte (QSSE). With ISE it is intended that the solid-state electrolyte's matrix is based on an inorganic compound. With SPE it is intended that the solid-state electrolyte's matrix is based on a polymer. With QSSE it is intended that the solid-state electrolyte's matrix is quasi solid.

Preferably the solid electrolyte is a solid polymer electrolyte (SPE). Preferably the solid state electrolyte comprises a polymer, more preferably a thermoplastic polymer. Preferably the polymer is selected from polyethylene oxides, polyvinylidene fluorides, polyacrylonitriles, polyamides (such as non-woven polyamide fabrics), polycarbonates, polyesters, polynitriles, polyalcohols, polyamines, polysiloxanes, fluoropolymers, ionic conducting polymers, polyethylene oxide-co-lactic acid), biopolymers, or combinations thereof or co-polymers thereof. When a biopolymer is present, it is preferably selected from lignin, chitosan, cellulose, or combinations thereof. Preferably the polymer comprises lithium (Li) salts or in other words, preferably Li salts are dissolved in the polymer. Preferably the polymer has a Tg of less than 300 °C, more preferably less than 250 °C, most preferably less than 200 °C .

Preferably the solid state electrolyte is an inorganic solid electrolyte (ISE). Preferably the solid-state electrolyte comprises sulphide-based compounds, more preferably Li₂S-P₂S₅; oxide-based compounds, more preferably Lithium Lanthanum Zirconate (LLZO) and/or Lithium Garnet (Li₇La₃Zr₂O₁₂); phosphate-based compounds, more preferably Li₃PO₄; ceramics, more preferably NASICON (sodium superionic conductor); or combinations thereof.

Preferably the solid-state electrolyte is a composite solid electrolyte comprising both polymers, preferably as listed above, and inorganic compounds, preferably as listed above.

Preferably the solid-state electrolyte is a quasi solid-state electrolyte (QSSE), for example wherein a liquid electrolyte is used together with solid compounds or a gel matrix is used (see among others, Shichun Yang, Zhengjie Zhang, Jiayuan Lin, Lisheng Zhang, Lijing Wang, Siyan Chen, Cheng Zhang and Xinhua Liu "Recent Progress in Quasi/All-Solid-State Electrolytes for Lithium-Sulfur Batteries" Front. Energy Res, 2022, vol. 10). Preferably the solid-state electrolyte comprises a gel, a quasi-solid polymer, and/or a modified metal-organic framework.

In a most preferred embodiment, the solid-state electrolyte contains
- 0.01 - 25 wt.% of porous, chemically interconnected, carbon nanofibres-comprising carbon networks, based on the total mass of the solid-state electrolyte
- a polymer, preferably selected from polyethylene oxides, polyvinylidene fluorides, polyacrylonitriles, polyamides (such as non-woven polyamide fabrics), polycarbonates, polyesters, polynitriles, polyalcohols, polyamines, polysiloxanes, fluoropolymers, ionic conducting polymers, polyethylene oxide-co-lactic acid), biopolymers, or combinations thereof or co-polymers thereof, and
- Li salts.

In a preferred embodiment, the solid-state electrolyte comprising porous, chemically interconnected, carbon nanofibres-comprising carbon networks according to the invention is used in a lithium solid-state battery wherein the anode is metallic lithium.

In a most preferred embodiment, the solid-state electrolyte comprising porous, chemically interconnected, carbon nanofibres-comprising carbon networks according to the invention is used in a (lithium) solid-state battery wherein the anode is the soli-state anode comprising porous, chemically interconnected, carbon nanofibres-comprising carbon networks according to the invention.

The skilled person will understand that the embodiment described herein for the solid-state electrolyte according to the invention equally apply to the use of a porous, chemically interconnected carbon nanofibres-comprising carbon networks as matrix material in a solid-state electrolyte of a (anode-less) solid-state battery according to the invention and to the battery according to the invention.

### Optional coating

In the aspects of the invention, the carbon nanofibres-comprising carbon networks may be comprised
- in a coating between a cathode and a solid-state electrolyte, and/or in a coating between a solid-state electrolyte and an anode in a solid-state battery; or
- in a coating between a cathode and a solid-state electrolyte, and/or in a coating between a solid-state electrolyte and a current collector in an anode-less solid-state battery.

In a preferred embodiment, the coating comprises more than 80 wt.%, more preferably more than 90 wt.% carbon nanofibres-comprising carbon networks. Most preferably consists of the carbon nanofibres-comprising carbon networks.

In an alternative preferred embodiment, the coating preferably comprises one or more of a ceramic material, a polymeric material, a metallic material, or an electroconductive polymeric material. In one embodiment, the coating preferably comprises a polymeric material, more preferably an electroconductive polymer, most preferably a thermoplastic polymer. In a most preferred embodiment, the coating comprises a metallic coating and the carbon nanofibres-comprising carbon networks according to the invention. More preferably the metallic coating is based on gold, nickel, titanium, and/or silver. Preferably the coating comprises 0.01 - 10 wt% carbon nanofibres-comprising carbon networks, more preferably 0.01 - 5 wt.%, most preferably 0.1 - 1 wt.% carbon nanofibres-comprising carbon networks.

The skilled person will understand that the embodiment described herein for the coating according to the invention equally apply to the use of a porous, chemically interconnected carbon nanofibres-comprising carbon networks according to the invention and to the battery according to the invention.

### Solid-state battery

In the fourth aspect, the invention concerns a solid-state battery comprising
(i) an anode comprising porous, chemically interconnected, carbon nanofibres-comprising carbon networks representing 2 - 100 wt%, preferably 5 - 100 wt%, of the total mass of the anode, and preferably a solid-state electrolyte comprising a thermoplastic polymer; and/or
(ii) a solid-state electrolyte comprising porous, chemically interconnected, carbon nanofibres-comprising carbon networks representing 0.01 - 50 wt%, preferably 0.01 - 25 wt%, preferably 0.05 - 50 wt%, most preferably 0.05 - 25 wt% of the total mass of the solid-state electrolyte.

Preferably the solid-state battery is a lithium solid-state battery.

In a preferred embodiment, the solid-state battery is a lithium solid-state battery comprising
(i) the solid-state battery anode according to the invention comprising porous, chemically interconnected, carbon nanofibres-comprising carbon networks; and
(ii) a solid polymer electrolyte (SPE), preferably wherein the SPE comprises a thermoplastic polymer.

Preferably the polymer is selected from polyethylene oxides, polyvinylidene fluorides, polyacrylonitriles, polyamides (such as non-woven polyamide fabrics), polycarbonates, polyesters, polynitriles, polyalcohols, polyamines, polysiloxanes, fluoropolymers, ionic conducting polymers, polyethylene oxide-co-lactic acid), biopolymers, or combinations thereof or co-polymers thereof. When a biopolymer is present, it is preferably selected from lignin, chitosan, cellulose, or combinations thereof.

In another preferred embodiment, the solid-state battery is a lithium solid-state battery, comprising
(i) a solid-state battery anode comprising metallic lithium, and
(ii) the solid-state electrolyte according to the invention, comprising
   a. porous, chemically interconnected, carbon nanofibres-comprising carbon networks; and
   b. lithium salts.

Preferably the solid-state electrolyte further comprises a thermoplastic polymer preferably selected from polyethylene oxides, polyvinylidene fluorides, polyacrylonitriles, polyamides (such as non-woven polyamide fabrics), polycarbonates, polyesters, polynitriles, polyalcohols, polyamines, polysiloxanes, fluoropolymers, ionic conducting polymers, polyethylene oxide-co-lactic acid), biopolymers, or combinations thereof or co-polymers thereof. When a biopolymer is present, it is preferably selected from lignin, chitosan, cellulose, or combinations thereof.

In another preferred embodiment, the solid state battery comprises
(i) the solid-state battery anode according to the invention comprising porous, chemically interconnected, carbon nanofibres-comprising carbon networks; and
(ii) the solid-state electrolyte according to the invention comprising porous, chemically interconnected, carbon nanofibres-comprising carbon networks.

Preferably the solid-state battery further comprises a coating between the cathode and the solid-state electrolyte and/or a coating between the solid-state electrolyte and the anode, wherein the coating comprises porous, chemically interconnected, carbon nanofibres-comprising carbon networks.

Preferably the solid-state battery further comprises a cathode comprising porous, chemically interconnected, carbon nanofibres-comprising carbon networks.

Preferably the anode, solid-state electrolyte, cathode, and coating have the properties described in the paragraphs above.

### Anode-less solid-state battery

In a further fourth aspect, the invention concerns an anode-less solid-state battery comprising
(i) a cathode comprising porous, chemically interconnected, carbon nanofibres-comprising carbon networks representing 0.1 - 25 wt% of the total mass of the cathode; and/or
(ii) a solid-state electrolyte comprising porous, chemically interconnected, carbon nanofibres-comprising carbon networks representing 0.01 - 50 wt%, preferably 0.01 - 25 wt%, preferably 0.05 - 50 wt%, most preferably 0.05 - 25 wt% of the total mass of the solid-state electrolyte; and/or
(iii) a coating between a cathode and a solid-state electrolyte and/or between a solid-state electrolyte and a current collector, wherein the coating comprises porous, chemically interconnected, carbon nanofibres-comprising carbon networks.

Preferably the anode-less solid-state battery is a lithium anode-less solid-state battery.

In a preferred embodiment, the anode-less solid-state battery is a lithium anode-less solid-state battery comprising
(i) the solid-state battery cathode according to the invention comprising porous, chemically interconnected, carbon nanofibres-comprising carbon networks; and
(ii) a solid polymer electrolyte (SPE), preferably wherein the SPE comprises a thermoplastic polymer; and
(iii) optionally a coating between the cathode and the solid-state electrolyte and/or between the solid-state electrolyte and a current collector, wherein the coating comprises porous, chemically interconnected, carbon nanofibres-comprising carbon networks.

Preferably the polymer is selected from polyethylene oxides, polyvinylidene fluorides, polyacrylonitriles, polyamides (such as non-woven polyamide fabrics), polycarbonates, polyesters, polynitriles, polyalcohols, polyamines, polysiloxanes, fluoropolymers, ionic conducting polymers, polyethylene oxide-co-lactic acid), biopolymers, or combinations thereof or co-polymers thereof. When a biopolymer is present, it is preferably selected from lignin, chitosan, cellulose, or combinations thereof.

In another preferred embodiment, the anode-less solid-state battery is a lithium anode-less solid-state battery, comprising
(i) a solid-state battery cathode comprising lithium, preferably selected from lithium cobalt oxide (LiCoO₂), lithium manganese oxide (LiMn₂O₄), lithium iron phosphate (LiFePO₄), .Li[NiₓCoₓMnₓ]O₂, Lithium Nickel Manganese Cobalt (NCM), or combinations thereof; and
(ii) the solid-state electrolyte according to the invention, comprising
   a. porous, chemically interconnected, carbon nanofibres-comprising carbon networks; and
   b. lithium salts; and
(iii) optionally a coating between the cathode and the solid-state electrolyte and/or between the solid-state electrolyte and a current collector, wherein the coating comprises porous, chemically interconnected, carbon nanofibres-comprising carbon networks.

Preferably the solid-state electrolyte further comprises a thermoplastic polymer preferably selected from polyethylene oxides, polyvinylidene fluorides, polyacrylonitriles, polyamides (such as non-woven polyamide fabrics), polycarbonates, polyesters, polynitriles, polyalcohols, polyamines, polysiloxanes, fluoropolymers, ionic conducting polymers, polyethylene oxide-co-lactic acid), biopolymers, or combinations thereof or co-polymers thereof. When a biopolymer is present, it is preferably selected from lignin, chitosan, cellulose, or combinations thereof.

In another preferred embodiment, the anode-less solid state battery comprises
(i) the anode-less solid-state battery cathode according to the invention comprising porous, chemically interconnected, carbon nanofibres-comprising carbon networks; and
(ii) the solid-state electrolyte according to the invention comprising porous, chemically interconnected, carbon nanofibres-comprising carbon networks; and
(iii) optionally a coating between the cathode and solid-state electrolyte and/or between the solid-state electrolyte and a current collector, wherein the coating comprises porous, chemically interconnected, carbon nanofibres-comprising carbon networks.

In a more preferred embodiment, the anode-less solid-state battery comprises
(i) the anode-less solid-state battery cathode according to the invention comprising porous, chemically interconnected, carbon nanofibres-comprising carbon networks; and
(ii) a coating according to the invention between the cathode and a solid-state electrolyte, the coating comprising porous, chemically interconnected, carbon nanofibres-comprising carbon networks.

In a most preferred embodiment, the anode-less solid-state battery comprises
(i) a coating according to the invention between a solid-state electrolyte and a current collector, the coating comprising porous, chemically interconnected, carbon nanofibres-comprising carbon networks.

Preferably the porous, chemically interconnected, carbon nanofibres-comprising carbon networks have the properties described in the paragraphs above. Preferably the cathode, solid-state electrolyte, and coating have the properties described in the paragraphs above.

### Device

In the fifth aspect, the invention concerns a battery-powered device comprising the solid-state battery of according to the invention or the anode-less solid-state battery according to the invention. Said device is preferably selected from smartphones, laptops, digital cameras and camcorders, medical and communication systems, Uninterruptible Power Supply (UPS), power plant energy storage, electric and/or hybrid vehicles, pacemakers, radio-frequency identification devices, drones, and wearable devices such as trackers.

The solid-state battery anode, solid-state electrolyte, or solid-state battery, (anode-less) solid-state battery cathode, or anode-less solid-state battery, or coating of the invention are particularly suitable for use in the manufacture of battery-powered electric devices. Hence the invention extends to battery-powered electric devices comprising at least one solid-state anode, at least a solid-state electrolyte, or at least one battery, at least one (anode-less) solid-state battery cathode, or at least one anode-less solid-state battery, or at least one coating comprising the porous, chemically interconnected, carbon nanofibres-comprising carbon networks according to the invention. Preferably the device is an Uninterruptible Power Supply (UPS) system, portable consumer electronic and electric and/or hybrid vehicle. Given the advantages brought about by the carbon networks when used in a solid-state battery, the above list of applications is non-exhaustive. For example, the solid-state battery may find application in space equipment.

### Process for obtaining carbon nanofibres-comprising carbon networks

A process for obtaining the above-described porous, chemically interconnected, carbon nanofibres-comprising carbon networks can be described best as a modified carbon black manufacturing process, wherein 'modified' is understood that a suitable oil, preferably an oil comprising at least 14 C atoms (>C14) such as carbon black feedstock oil (CBFS), is provided to the reaction zone of a carbon black reactor as part of a single-phase emulsion, being a thermodynamically stable micro-emulsion of the water-in-oil, oil-in-water or bicontinuous type, preferably a water-in-oil or bicontinuous micro-emulsion, most preferably a bicontinuous micro-emulsion, comprising metal catalyst nanoparticles. The emulsion is preferably provided to the reaction zone by spraying, thus atomizing the emulsion to droplets. While the process can be carried out batch or semi-batch wise, the modified carbon black manufacturing process is advantageously carried out as a continuous process. The single-phase emulsion is a micro-emulsion comprising metal catalyst nanoparticles. The preferred single-phase emulsion comprises CBFS oil, and may be referred to as `emulsified CBFS' in the context of the invention.

The process for the production of the carbon networks can be performed in a reactor (3) which contains a reaction zone (3b) and a termination zone (3c), by injecting a thermodynamically stable micro-emulsions of the water-in-oil, oil-in-water or bicontinuous type (c), preferably a water-in-oil or bicontinuous micro-emulsion (c), a bicontinuous micro-emulsion (c), said micro-emulsion comprising metal catalyst nanoparticles, into the reaction zone (3b) which is at a temperature of above 600 °C, preferably above 700 °C, more preferably above 900 °C, even more preferably above 1000 °C, more preferably above 1100 °C, preferably up to 3000 °C, more preferably up to 2500 °C, most preferably up to 2000 °C, to produce crystalline carbon networks (e), transferring these networks e to the termination zone (3c), and quenching or stopping the formation of crystalline carbon networks in the termination zone by spraying in water (d).

Alternatively, the process is performed in a furnace carbon black reactor (3) which contains, along the axis of the reactor (3), a combustion zone (3a), a reaction zone (3b) and a termination zone (3c), by producing a stream of hot waste gas (a1) in the combustion zone by burning a fuel a in an oxygen-containing gas (b) and passing the waste gas (a1) from the combustion zone (3a) into the reaction zone (3b), spraying a micro-emulsion of the water-in-oil, oil-in-water or bicontinuous type (c), preferably a water-in-oil or bicontinuous micro-emulsion (c), most preferably a bicontinuous micro-emulsion (c), said micro-emulsion comprising metal catalyst nanoparticles, in the reaction zone (3b) containing the hot waste gas, carbonizing said emulsion at a temperature of above 600 °C, preferably above 700 °C, more preferably above 900 °C, even more preferably above 1000 °C, more preferably above 1100 °C, preferably up to 3000 °C, more preferably up to 2500 °C, most preferably up to 2000 °C, and quenching or stopping the reaction in the termination zone (3c) by spraying in water (d), to yield crystalline carbon networks (e). The reaction zone (3b) comprises at least one inlet (preferably a nozzle) for introducing the emulsion, preferably by atomization. Reference is made to Figure 1A.

Residence times for the emulsion in the reaction zone of the furnace carbon black reactor can be relatively short, preferably ranging from 1 - 1000 ms, more preferably 10 - 100 ms. Longer residence times may have an effect on the properties of the carbon networks. An example may be the size of crystallites which is higher when longer residence times are used.

In accordance with conventional carbon black manufacturing processes, the oil phase can be aromatic and/or aliphatic, preferably comprising at least 50 wt.% C14 or higher, more preferably at least 70 wt.% C14 or higher (based on the total weight of the oil). List of typical oils which can be used, but not limited to obtain stable emulsions are carbon black feedstock oils (CBFS), phenolic oil, anthracene oils, (short-medium-long chain) fatty acids, fatty acids esters and paraffins. The oil is preferably a C14 or higher. In one embodiment, the oil preferably has high aromaticity. Within the field, the aromaticity is preferably characterized in terms of the Bureau of Mines Correlation Index (BMCI). The oil preferably has a BMCI > 50. In one embodiment, the oil is low in aromaticity, preferably having a BMCI < 15.

CBFS is an economically attractive oil source in the context of the invention, and is preferably a heavy hydrocarbon mix comprising predominantly C14 to C50, the sum of C14 - C50 preferably amounting to at least 50 wt.%, more preferably at least 70 wt.% of the feedstock. Some of the most important feedstocks used for producing carbon black include clarified slurry oil (CSO) obtained from fluid catalytic cracking of gas oils, ethylene cracker residue from naphtha steam cracking and coal tar oils. The presence of paraffins (<C15) substantially reduces their suitability, and a higher aromaticity is preferred. The concentration of aromatics determines the rate at which carbon nuclei are formed. The carbon black feedstock preferably has a high BMCI to be able to offer a high yield with minimum heat input hence reducing the cost of manufacturing. In a preferred embodiment, and in accordance with current CBFS specifications, the oil, including mixtures of oil, has a BMCI value of more than 120. While the skilled person has no difficulties understanding which are suitable CBFS, merely as a guide it is noted that - from a yield perspective - a BMCI value for CBFS is preferably more than 120, even more preferably more than 132. The amount of asphaltene in the oil is preferably lower than 10 wt.%, preferably lower than 5.0 wt.% of the CBFS weight. The CBFS preferably has low sulphur content, as sulphur adversely affects the product quality, leads to lower yield and corrodes the equipment.

It is preferred that the sulphur content of the oil according to ASTM D1619 is less than 8.0 wt.%, preferably below 4.0 wt.% more preferably less than 2.0 wt.%.

The emulsion, preferably a CBFS-comprising emulsion, is a "single-phase emulsion" which is understood to mean that the oil phase and the water phase optically appear as one miscible mixture showing no physical separation of oil, water or surfactant to the naked eye. The single-phase emulsion is a micro-emulsion of the water-in-oil, oil-in-water or bicontinuous type, preferably a water-in-oil or bicontinuous micro-emulsion, most preferably a bicontinuous micro-emulsion. The process by which an emulsion completely breaks (coalescence), i.e. the system separates into bulk oil and water phases, is generally considered to be controlled by four different droplet loss mechanisms, i.e., Brownian flocculation, creaming, sedimentation flocculation and disproportionation.

Provided that a micro-emulsion as described above is obtained, the amounts of water and oil are not regarded limiting, but it is noted that reduced amounts of water (and increased amounts of oil) improve yields. The water content is typically between 5 and 50 wt% of the emulsion, preferably 10 - 40 wt%, even more preferably up to 30 wt%, more preferably 10- 20 wt% of the emulsion. While higher amounts of water can be considered, it will be at the cost of yield. Without wishing to be bound by any theory, the inventors believe that the water phase attributes to the shape and morphology of the networks thus obtained.

The choice of surfactant(s) is not regarded a limiting factor, provided that the combination of the oil, water and surfactant(s) results in a stable micro-emulsion as defined here above. As further guidance to the skilled person, it is noted that the surfactant can be selected on the basis of the hydrophobicity or hydrophilicity of the system, i.e. the hydrophilic-lipophilic balance (HLB). The HLB of a surfactant is a measure of the degree to which it is hydrophilic or lipophilic, determined by calculating values for the different regions of the molecule, according to the Griffin or Davies method. The appropriate HLB value depends on the type of oil and the amount of oil and water in the emulsion, and can be readily determined by the skilled person on the basis of the requirements of retaining a thermodynamically stable, single phase emulsion as defined above. It is found that an emulsion comprising more than 50 wt% oil, preferably having less than 30 wt% water phase, would be stabilized best with a surfactant having an HLB value above 7, preferably above 8, more preferably above 9, most preferably above 10. On the other hand, an emulsion with at most 50 wt% oil would be stabilized best with a surfactant having an HLB value below 12, preferably below 11, more preferably below 10, most preferably below 9, particularly below 8. The surfactant is preferably selected to be compatible with the oil phase. In case the oil is a CBFS-comprising emulsion with a CBFS, a surfactant with high aromaticity is preferred, while an oil with low BMCI, such as characterized by BMCI < 15, would be stabilized best using aliphatic surfactants. The surfactant(s) can be cationic, anionic or non-ionic, or a mixture thereof. One or more non-ionic surfactants are preferred, in order to increase the yields since no residual ions will be left in the final product. In order to obtain a clean tail gas stream, the surfactant structure is preferably low in sulphur and nitrogen, preferably free from sulphur and nitrogen. Non-limiting examples of typical non-ionic surfactants which can be used to obtain stables emulsions are commercially available series of Tween, Span, Hypermer, Pluronic, Emulan, Neodol, Triton X and Tergitol.

In the context of the invention, a micro-emulsion is a dispersion made of water, oil (preferably CBFS), and surfactant(s) that is a single optically and thermodynamically stable liquid with dispersed domain diameter varying approximately from 1 to 500 nm, preferably 1 to 100 nm, usually 10 to 50 nm. In a micro-emulsion the domains of the dispersed phase are either globular (i.e. droplets) or interconnected (to give a bicontinuous micro-emulsion). In a preferred embodiment, the surfactant tails form a continuous network in the oil-phase of a micro-emulsion of the water-in-oil, oil-in-water or bicontinuous type, preferably a water-in-oil or bicontinuous micro-emulsion, most preferably a bicontinuous micro-emulsion. The water domains should contain a metal catalyst, preferably having an average particle size between 1 nm and 100 nm.

The single-phase emulsion, i.e. a micro-emulsion of the water-in-oil, oil-in-water or bicontinuous type, preferably a water-in-oil or bicontinuous micro-emulsion, most preferably a bicontinuous micro-emulsion, further comprises metal catalyst nanoparticles preferably having an average particle size between 1 and 100 nm. The skilled person will find ample guidance in the field of carbon nanotubes (CNTs) to produce and use these kinds of nanoparticles. These metal nanoparticles are found to improve network formation in terms of both rates and yields, and reproducibility. Methods for manufacturing suitable metal nanoparticles are found in Vinciguerra et al. "Growth mechanisms in chemical vapour deposited carbon nanotubes" Nanotechnology (2003) 14, 655; Perez-Cabero et al. "Growing mechanism of CNTs: a kinetic approach" J. Catal. (2004) 224, 197-205; Gavillet et al. "Microscopic mechanisms for the catalyst assisted growth of single-wall carbon nanotubes" Carbon. (2002) 40, 1649-1663 and Amelinckx et al. "A formation mechanism for catalytically grown helix-shaped graphite nanotubes" Science (1994) 265, 635-639, their contents about manufacturing metal nanoparticles herein incorporated by reference.

The metal catalyst nanoparticles are used in a micro-emulsion of the water-in-oil, oil-in-water or bicontinuous type, preferably a water-in-oil or bicontinuous micro-emulsion, most preferably a bicontinuous micro-emulsion. Advantageously, the uniformity of the metal particles is controlled in said (bicontinuous) micro-emulsion by mixing a first (bicontinuous) micro-emulsion in which the aqueous phase contains a metal complex salt capable of being reduced to the ultimate metal particles, and a second (bicontinuous) micro-emulsion in which the aqueous phase contains a reductor capable of reducing said metal complex salt; upon mixing the metal complex is reduced, thus forming metal particles. The controlled (bicontinuous) emulsion environment stabilizes the particles against sintering or Ostwald ripening. Size, concentrations and durability of the catalyst particles are readily controlled. It is considered routine experimentation to tune the average metal particle size within the above range, for instance by amending the molar ratio of metal precursor vs. the reducing agent. An increase in the relative amount of reducing agent yields smaller particles. The metal particles thus obtained are monodisperse, deviations from the average particle size are preferably within 10 %, more preferably within 5 %. Also, the present technology provides no restraint on the actual metal precursor, provided it can be reduced. Non-limiting examples of nanoparticles included in the carbon nanofibres-comprising carbon networks are the noble metals (Pt, Pd, Au, Ag), iron-family elements (Fe, Co and Ni), Ru, and Cu. Suitable metal complexes may be (i) platinum precursors such as H₂PtCl₆; H₂PtCl₆·xH₂O; K₂PtCl₄; K₂PtCl₄·xH₂O; Pt(NH₃)₄(NO₃)₂; Pt(C₅H₇O₂)₂, (ii) ruthenium precursors such as Ru(NO)(NO₃)₃; Ru(dip)₃Cl₂ [dip = 4,7-diphenyl-1,10-fenanthroline]; RuCl₃, or (iii) palladium precursors such as Pd(NO₃)₂, or (iv) nickel precursors such as NiCl₂ or NiCl₂.xH₂O; Ni(NO₃)₂; Ni(NO₃)₂·xH₂O; Ni(CH₃COO)₂; Ni(CH₃COO)₂·xH₂O; Ni(AOT)₂ [AOT = bis(2-ethylhexyl)sulphosuccinate], wherein x may be any integer chosen from 1, 2, 3, 4, 5, 6, 7, 8, 9 or 10 and typically is 6, 7 or 8. Non-limiting suitable reducing agents are hydrogen gas, sodium boron hydride, sodium bisulphate, hydrazine or hydrazine hydrate, ethylene glycol, methanol and ethanol. Also suited are citric acid and dodecylamine. The type of metal precursor is not an essential part of the invention. The metal of the particles of the (bicontinuous) micro-emulsion are preferably selected from the group consisting of Pt, Pd, Au, Ag, Fe, Co, Ni, Ru and Cu, and mixtures thereof, in order to control morphology of the carbon structures networks ultimately formed. The metal nanoparticles end up embedded inside these structures where the metal particles are physically attached to the structures. While there is no minimum concentration of metal particles at which these networks are formed - in fact networks are formed using the modified carbon black manufacturing process according to the invention - it was found that the yields increase with the metal particle concentrations. In a preferred embodiment, the active metal concentration is at least 1 mM, preferably at least 5 mM, preferably at least 10 mM, more preferably at least 15 mM, more preferably at least 20 mM, particularly at least 25 mM, most preferably up to 3500 mM, preferably up to 3000 mM. In one embodiment, the metal nanoparticles comprise up to 250 mM. These are concentrations of the catalyst relative to the amount of the aqueous phase of the (bicontinuous) micro-emulsion.

Atomization of the single-phase emulsion, preferably a CBFS-comprising emulsion, is preferably realized by spraying, using a nozzle-system (4), which allows the emulsion droplets to come in contact with the hot waste gas (a1) in the reaction zone (3b), resulting in traditional carbonization, network formation and subsequent agglomeration, to produce carbon networks according to the invention. The injection step preferably involves increased temperatures above 600 °C, preferably between 700 and 3000 °C, more preferably between 900 and 2500 °C, more preferably between 1100 and 2000 °C.

### Examples

### Example 1

Example 1 shows the improved mechanical strength and resistance to external forces of carbon nanofibres-comprising carbon networks - thermoplastic composite layers.

### Method

A 3D object was obtained by 3D-printing a polyamide 6, i.e. Nylon 6, (PA6) matrix comprising 23 wt% of the porous, chemically interconnected, carbon nanofibres comprising carbon networks according to the invention (CBX1). PA6 is a well-known thermoplastic polymer, as is used herein as an example of thermoplastic. CBX1 produced according to the invention had the characteristics reported in Table 1.

**Table 1. Characterisation of carbon nanofibres-comprising carbon networks of example 1.**

| **Characterisation** | | **CBX1** |
|---|---|---|
| d-spacing (XRD) | nm | 0.371 |
| Pore Volume (N2 physisorption) | [mL/g] | |
| Pore Volume (MIP) | [mL/g] | 0.66 |
| Surface Area (BET) | [m²/g] | 189 |
| Pore Diameter (MIP) | [nm] | 20 |
| Pore Diameter (BET) | [nm] | |
| Particle Size Distribution (DCP, Δ50, ISO 15825:2017) | [nm] | 44 |
| Aggregate size distribution (Laser Diffraction - 2 bars Δ50) | [µm] | 4.9 |
| Particle diameter (SEM) | [nm] | 35 |

The final 3D-printed object contained was made of composite layers of PA6 and CBX1. The object was subjected to shear stress and trials to separate the layers by using several tools.

### Results

CBX1 aggregate formed a strong 3D network that endures the harsh processing conditions of 3D printing. CBX1 aggregates did not align in the process of 3D printing, leading to isotropic behaviour in the produced part.

The PA6-CBX1 layers did not break upon shear stress and mechanical challenges. The layer - layer adhesion was strong enough to absorb the exerted force. Layer adhesion was improved not only visually but also by trying to pry the layers apart by hand or with a tool. The printed part did not crack along the layers.

The inventors believe this increase in object resistance to shear stress was due to the strong interaction between the carbon networks and the thermoplastic polymer. The layer - layer interaction was particularly strong and resistant to exerted force. This is particularly relevant in solid-state batteries wherein an anode comprising or consisting of carbon networks forms an interface with a solid-state electrolyte, possibly made of a thermoplastic material. This is particularly relevant in anode-less solid-state batteries, wherein the cathode comprising the carbon networks forms an interface with a solid-state electrolyte, or with a coating, possibly wherein the solid-state electrolyte or coating are made of a thermoplastic material. The more shear stress such interface can withstand, the less failure to interfacial delamination issues and volume expansion. The results are also highly relevant to solid-state electrolyte wherein carbon networks according to the invention are mixed with polymeric materials, resulting in an electrolyte which is conductive, but also has improved mechanical properties.

### Example 2

Example 2 shows the specific capacity over cycles for a lithium batteries wherein the anode comprises the carbon-nanofibres-comprising carbon networks of the invention.

### Method

Carbon nanofibres-comprising carbon networks according to the invention (CBX1) have been manufactured in a furnace carbon black reactor. The characteristics of CBX1 are reported in Table 1.

### Anode Paste Preparation

PVDF in mg amounts was dissolved in NMP (7.00 g) using mechanical stirring for 45 min. Carbon networks (CBX1) in g amounts was added, and glass beads of 4 mm in diameter (1.0 g) were also added to increase shear during mixing. The paste was mixed in a Speedmixer (Hauschildt) for 2 min at 2500 rpm, followed by another 10 min at 2500 rpm to obtain the anode paste.

### Half-Cell Preparation

A spring, spacer, lithium disc (15.6 mm), drops of electrolyte (EC/EMC 1:1 1M LiPF6), electrolyte (EC/EMC 1:1 1M LiPF6) soaked separator (20 mm), drops of electrolyte (EC/EMC 1:1 1M LiPF6) and downfacing anode are crimped together in a CR2032 coin cell inside a glovebox. After extraction of the half-cell from the glovebox, it was immediately used for electrochemical testing.

### Cyclability (cycle life)

The fresh half-cell was discharged at a constant discharge current of 0.2 C (discharge in ~5 hours), until the potential was dropped to 0.01 V. The half-cell was then kept at 0.01 V for 1 hour, or until the discharge current was <1% of initial discharge current. The half-cell was then left to equilibrate for 1 hour, before being charged at 0.2 C (charge in ~5 hours) to 2.0 V. The half-cell was then kept at 2.0 V for 1 hour, or until the charge current was <1% of initial charge current. This was a single cycle. The cycle was repeated for as many times as possible (in view of time) and the decrease in capacity was monitored as a function of cycles.

### Results

In the field, capacity loss is considered to be when the specific capacity drops to less than 80%. Figure 2 shows that specific capacity for an half-cell containing the anode of the invention is retained to more than 90% up to 1500 cycle. At 2362 cycles, capacity was still at 83%. These results were obtained with a liquid electrolyte, but are equally expected in the case of solid electrolytes. In the art it is known that the life cycle of solid-state batteries is improved compared to conventional lithium ion batteries, because solid-state electrolytes are considered more stable. Hence, it is expected that the high number of cycle without capacity loss observed for lithium ion batteries comprising the carbon networks of the invention, will equally apply or be even better in solid-state batteries. These results are entirely unexpected and advantageous, because specific capacity in solid-state batteries typically drops at around 200 cycles. A solid-state battery achieving 1000 cycles is already considered outstanding. Moreover, cyclability is an important factor for emerging anode-less solid-state batteries. Since improving high stability in solid-state batteries and anode-less solid-state batteries is a major challenge, the use of carbon-nanofibres carbon networks is particularly advantageous in solid-state batteries or anode-less solid-state batteries.

## Claims

1. Use of porous, chemically interconnected, carbon nanofibres-comprising carbon networks
- as electrochemically active material in an anode, and/or
- as matrix material in a solid-state electrolyte, and/or
- in a coating between a cathode and a solid-state electrolyte, and/or
- in a coating between an anode and a solid-state electrolyte, and/or
- as electrochemically active material in a cathode,
of a solid-state battery.

2. Use according to claim 1, wherein said carbon nanofibres-comprising carbon networks represent 2 - 100 wt%, preferably more than 2 and less than 100 wt%, of the total mass of the anode.

3. Use of porous, chemically interconnected, carbon nanofibres-comprising carbon networks
- as electrochemically active material in a cathode, and/or
- as matrix material in a solid-state electrolyte, and/or
- in a coating between a cathode and a solid-state electrolyte, and/or
- in a coating between a solid-state electrolyte and a current collector,
of an anode-less solid-state battery.

4. Use according to claim 3, wherein said carbon nanofibres-comprising carbon networks represent 0.1 - 25 wt.% of the total mass of the cathode.

5. Use according to any one of the preceding claims, wherein the carbon nanofibres-comprising carbon networks represent 0.01 - 25 wt.% of the total mass of the solid-state electrolyte.

6. Use according to any one of the preceding claims, wherein the solid-state electrolyte further comprises a polymer, preferably a thermoplastic polymer, more preferably wherein the polymer is selected from polyethylene oxides, polyvinylidene fluorides, polyacrylonitriles, polyamides (such as non-woven polyamide fabrics), polycarbonates, polyesters, polynitriles, polyalcohols, polyamines, polysiloxanes, fluoropolymers, ionic conducting polymers, polyethylene oxide-co-lactic acid), biopolymers, or combinations thereof or co-polymers thereof.

7. Use according to any one of the preceding claims, wherein the carbon network comprises crystalline carbon-nanofibres,
wherein the average fibre length of the carbon nanofibres is 30 - 10,000 nm,
wherein the carbon nanofibres-comprising carbon networks are porous carbon networks forming an intraparticle porous network,
wherein the carbon nanofibres are interconnected to other carbon nanofibres in the network by chemical bonds via junctions,
wherein the pores in the network have an intraparticle pore diameter size of 5-150 nm using Mercury Intrusion Porosimetry according to ASTM D4404-10, and
wherein the carbon nanofibres have an average aspect ratio of fibre length-to-thickness of at least 2, preferably having a d-spacing in the range of 0.340 to 0.5 nm.

8. A solid-state battery anode comprising porous, chemically interconnected, carbon nanofibres-comprising carbon networks representing 2 - 100 wt%, preferably more than 2 and less than 100 wt%, of the total mass of the anode.

9. A (anode-less) solid-state battery cathode comprising porous, chemically interconnected, carbon nanofibres-comprising carbon networks representing 0.1 - 25 wt%, preferably more than 0.1 and less than 25 wt%, of the total mass of the cathode.

10. A solid-state electrolyte comprising porous, chemically interconnected, carbon nanofibres-comprising carbon networks representing 0.01 - 25 wt.% of the total mass of the solid-state electrolyte.

11. The solid-state battery anode according to claim 8, the (anode-less) solid-state battery cathode according to claim 9, or the solid-state electrolyte according to claim 10, wherein the porous carbon networks form an intraparticle porous network,
wherein the carbon nanofibres are interconnected to other carbon nanofibres in the network by chemical bonds via junctions,
wherein the pores in the network have an intraparticle pore diameter size of 5-150 nm using Mercury Intrusion Porosimetry according to ASTM D4404-10, and
the carbon nanofibres have an average aspect ratio of fibre length-to thickness of at least 2, preferably having a d-spacing of 0.340 to 0.5 nm.

12. A solid-state battery comprising the anode according to any one of claims 8 or 11 and/or the solid-state battery cathode according to any one of claims 9 or 11 and/or the solid-state electrolyte according to any one of claims 10 or 11.

13. An anode-less solid-state battery comprising the cathode according to any one of claims 9 or 11 and/or the solid-state electrolyte according to any one of claims 10 or 11.

14. A battery-powered device comprising the solid-state battery of claim 12 or the anode-less solid-state battery of claim 13, wherein said device is selected from smartphones, laptops, digital cameras and camcorders, medical and communication systems, Uninterruptible Power Supply (UPS), power plant energy storage, electric and/or hybrid vehicles, pacemakers, radio-frequency identification devices, drones, and wearable devices such as trackers.

15. Use according to any one of claims 1 - 7, the solid-state battery anode according to any one of claims 8 or 11, the (anode-less) solid-state battery cathode according to any one of claims 9 or 11, the solid-state electrolyte according to any one of claims 10 or 11, the solid-state battery according to claim 12, the anode-less solid-state battery according to claim 13, or the device according to claim 14, wherein the carbon networks are obtainable by a process for producing crystalline carbon networks in a reactor (3) which contains a reaction zone (3b) and a termination zone (3c), by injecting a micro-emulsion of the water-in oil, oil-in-water or bicontinuous type (c), comprising metal catalyst nanoparticles, into the reaction zone (3b) which is at a temperature of above 600 °C, preferably above 700 °C, more preferably above 900 °C, even more preferably above 1000 °C, more preferably above 1100 °C, preferably up to 3000 °C, more preferably up to 2500 °C, most preferably up to 2000 °C, to produce crystalline carbon networks (e), transferring these networks (e) to the termination zone (3c), and quenching or stopping the formation of crystalline carbon networks in the termination zone by spraying in water (d).
